(19) Europäisches Patentamt
European Patent Office
Office européen des brevets

(11) **EP 4 299 888 A1**

(12) **EUROPEAN PATENT APPLICATION**

(43) Date of publication:
**03.01.2024  Bulletin 2024/01**

(21) Application number: **23171308.2**

(22) Date of filing: **03.05.2023**

(51) International Patent Classification (IPC):
**F02C 7/14** $^{(2006.01)}$        **F02C 7/16** $^{(2006.01)}$

(52) Cooperative Patent Classification (CPC):
**F02C 7/16; F02C 7/14;** F05D 2260/213

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2022  US 202217854052**

(71) Applicant: **General Electric Company
Schenectady, NY 12345 (US)**

(72) Inventors:
• **OWOEYE, Eyitayo James**
  **Schenectady, 12345 (US)**
• **MORTON, William**
  **Schenectady, 12345 (US)**
• **MINAS, Constantinos**
  **Schenectady, 12345 (US)**
• **BRZEK, Brian Gene**
  **Schenectady, 12345 (US)**

(74) Representative: **Openshaw & Co.
8 Castle Street
Farnham, Surrey GU9 7HR (GB)**

(54)    **THERMAL TRANSPORT BUS CAPACITY FOR A THERMAL TRANSPORT BUS IN A TURBOFAN ENGINE**

(57)    A turbofan engine (100) includes a fan (134), a core turbine engine (106), and a thermal management system (200). The thermal management system (200) has a thermal transport bus (210) along which a working fluid (WF) is movable, one or more heat-source heat exchangers (220) positioned along the thermal transport bus (210), and one or more heat-sink heat exchangers (240) arranged in fluid communication with the one or more heat-source heat exchangers (220) via the thermal transport bus (210). The thermal transport bus (210) has a thermal transport bus capacity (TTBC) determined by multiplying a propulsive effectiveness factor (PEF) associated with the turbofan engine (100) by a heat load factor (HLF) associated with the thermal transport bus (210). The thermal transport bus capacity (TTBC) is between 0.07 and 33.65 for an overall inlet temperature ($T_{Inlet}$) of the working fluid (WF) at an overall inlet (222) of the one or more heat-source heat exchangers (220) being between 31 and 200 degrees Celsius and the propulsive effectiveness factor (PEF) being between 0.52 and 1.37.

FIG. 2

EP 4 299 888 A1

**Description**

FIELD

The present disclosure relates to turbofan engines having thermal management systems.

BACKGROUND

There has been a drive to have more fuel efficient, higher thrust, and quieter gas turbine engines that produce less carbon dioxide emissions. Designing a gas turbine engine to achieve these desired performance goals may increase the heat load generated by the gas turbine engine. Accordingly, improved thermal management systems for gas turbine engines would be a welcome addition to the art.

BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:

FIG. 1 provides a schematic cross-sectional view of a turbofan engine in accordance with an example embodiment of the present disclosure;
FIG. 2 provides a schematic diagram of a thermal management system of the turbofan engine 100 of FIG. 1;
FIG. 3 provides a schematic view of one example arrangement of heat-source heat exchangers for the thermal management system of FIG. 2;
FIG. 4 provides a schematic view of another example arrangement of heat-source heat exchangers for the thermal management system of FIG. 2;
FIG. 5 provides a schematic view of yet another example arrangement of heat-source heat exchangers for the thermal management system of FIG. 2;
FIG. 6 provides a schematic view of yet another example arrangement of heat-source heat exchangers for the thermal management system of FIG. 2;
FIG. 7 lists various relationships between operational and architectural characteristics of a turbofan engine and characteristics associated with a thermal management system of the turbofan engine in accordance with example embodiments of the present disclosure;
FIGS. 8 through 15 each provide graphs depicting a thermal transport bus capacity of a thermal transport bus of a turbofan engine as a function of an inlet temperature of a working fluid flowing along the thermal transport bus at an overall inlet of one or more heat-source heat exchangers positioned along the thermal transport bus in accordance with example embodiments of the present disclosure;
FIG. 16 provides a table listing values for different example turbofan engines in accordance with example embodiments of the present disclosure; and
FIG. 17 provides a flow diagram for a method of operating a turbofan engine in accordance with an example embodiment of the present disclosure.

DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

The term "at least one of' in the context of, e.g., "at least one of A, B, and C" refers only A, only B, only C, or any combination of A, B, and C.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

The terms "cold" and "hot" are used for to denote the temperature of one fluid relative to another, and not a specific temperature measurement or threshold. Similarly, the terms "relatively cool" and "relatively hot" are meant to denote that a temperature of a fluid is cooler or hotter at that stage of a cycle than previously noted. For instance, after heat is imparted to a fluid, the fluid may become "relatively hot" compared to its temperature prior to the heat being applied to the fluid. Such terms are not meant to denote a specific temperature measurement or threshold.

Engine designers continue to push for more fuel efficient, higher thrust, and quieter turbofan engines that produce less carbon dioxide emissions. Achieving such desired performance goals may consequently increase the heat load generated by a turbofan engine. Transporting the heat load to one or more heat sinks may present certain challenges.

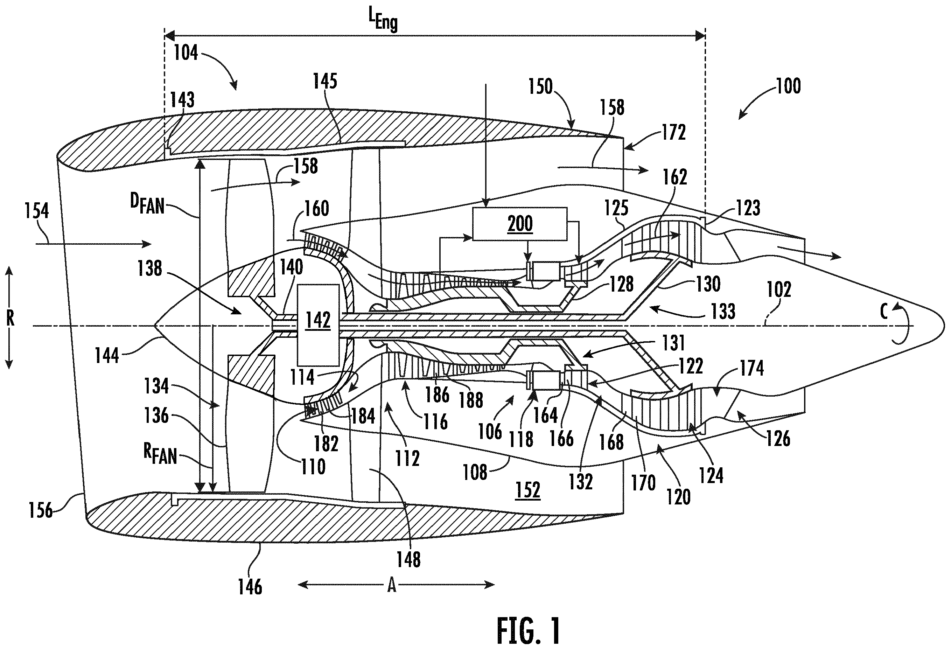

The inventors of the present disclosure developed architectures for turbofan engines having improved thermal management systems that include a thermal transport bus operable to facilitate heat transfer and transport of a heat load generated by a turbofan engine. Particularly, the inventors proceeded in the manner of designing turbofan engines with given fan, engine length, and bypass ratio characteristics, and thermal management system characteristics; checking the capacity of the thermal transport bus to process the heat load generated by the turbofan engine (e.g., transferring a heat load from hot fluids to a working fluid, transporting the heat load via the working fluid, and transferring the heat load from the working fluid to one or more heat sinks); redesigning the turbofan engine and/or the thermal management system by varying the fan, engine length, and bypass ratio characteristics, and thermal management system characteristics; and rechecking the potential of the thermal transport bus to process the heat load generated by the redesigned turbofan engine and/or thermal management system during the design of several different types of turbofan engines, including the turbofan engine described below with reference to FIG. 1.

During the course of this practice of studying/evaluating various fan, engine length, and bypass ratio characteristics, and thermal management system characteristics considered feasible for best satisfying mission requirements, the inventors unexpectedly discovered that a certain relationship exists between a turbofan engine's propulsion capability and a capability of the thermal transport bus to process heat load. This relationship is captured by a thermal transport bus capacity. The thermal transport bus capacity can be thought of as an indicator of the effectiveness of the thermal transport bus to process a heat load generated by a turbofan engine given the architectural arrangement and operational characteristics of the turbofan engine and the thermal management system.

Referring now to the drawings, FIG. 1 provides a schematic cross-sectional view of a turbofan engine 100 according to an example embodiment of the present disclosure. For the depicted embodiment of FIG. 1, the turbofan engine 100 is an aeronautical, high-bypass turbofan engine configured to be mounted to an aircraft, e.g., in an under-wing configuration. As shown, the turbofan engine 100 defines an axial direction A, a radial direction R, and a circumferential direction C. The axial direction A extends parallel to or coaxial with a longitudinal centerline 102 defined by the turbofan engine 100.

The turbofan engine 100 includes a fan section 104 and a core turbine engine 106 disposed downstream of the fan section 104. The core turbine engine 106 includes an engine cowl 108 that defines an annular core inlet 110. The engine cowl 108 encases, in a serial flow relationship, a compressor section 112 including a first, booster or LP compressor 114 and a second, HP compressor 116; a combustion section 118; a turbine section 120 including a first, HP turbine 122 and a second, LP turbine 124; and an exhaust section 126. The compressor section 112, combustion section 118, turbine section 120, and exhaust section 126 together define a core air flowpath 132 through the core turbine engine 106.

An HP shaft 128 drivingly connects the HP turbine 122 to the HP compressor 116. An LP shaft 130 drivingly connects the LP turbine 124 to the LP compressor 114. The HP shaft 128, the rotating components of the HP compressor 116 that are mechanically coupled with the HP shaft 128, and the rotating components of the HP turbine 122 that are mechanically coupled with the HP shaft 128 collectively form a high pressure spool, or HP spool 131. The LP shaft 130, the rotating components of the LP compressor 114 that are mechanically coupled with the LP shaft 130, and the rotating components of the LP turbine 124 that are mechanically coupled with the LP shaft 130 collectively form a low pressure spool, or LP spool 133.

The fan section 104 includes a fan assembly 138 having a fan 134 mechanically coupled with a fan rotor 140. The fan 134 has a plurality of fan blades 136 circumferentially-spaced apart from one another. As depicted, the fan blades 136 extend outward from the fan rotor 140 along the radial direction R. A power gearbox 142 mechanically couples the LP spool 133 and the fan rotor 140. The power gearbox 142 may also be called a main gearbox. The power gearbox 142 includes a plurality of gears for stepping down the rotational speed of the LP shaft 130 to provide a more efficient rotational fan speed of the fan 134. In other example embodiments, the fan blades 136 of the fan 134 can be mechanically coupled with a suitable actuation member configured to pitch the fan blades 136 about respective pitch axes, e.g., in unison. In some alternative embodiments, the turbofan engine 100 does not include the power gearbox 142. In such alternative embodiments, the fan 134 can be directly mechanically coupled with the LP shaft 130, e.g., in a direct drive configuration.

Referring still to FIG. 1, the fan rotor 140 and hubs of the fan blades 136 are covered by a rotatable spinner 144 aerodynamically contoured to promote an airflow through the plurality of fan blades 136. Additionally, the fan section 104 includes an annular fan casing 145 and an outer nacelle 146 connected to the fan casing 145. The fan casing 145 and the outer nacelle 146 both circumferentially surround the fan 134 and/or at least a portion of the core turbine engine 106. The fan casing 145 and the outer nacelle 146 are supported relative to the core turbine engine 106 by a plurality of circumferentially-spaced outlet guide vanes 148. A downstream section 150 of the nacelle 146 extends over an outer portion of the core turbine engine 106 so as to define a bypass passage 152 therebetween.

During operation of the turbofan engine 100, a volume of air 154 enters the turbofan engine 100 through an associated inlet 156 of the nacelle 146 and/or fan section 104. As the volume of air 154 passes across the fan blades 136, a first portion of air 158 is directed or routed into the bypass passage 152 and a second portion of air 160 is directed or routed into the core inlet 110. The pressure of the second portion of air 160 is progressively increased as it flows downstream through the LP compressor 114 and HP compressor 116. Particularly, the LP compressor 114 includes sequential stages of LP compressor stator vanes 182 and LP compressor blades 184 that progressively compress the second portion of air 160. The LP compressor blades 184 are mechanically coupled to the LP shaft 130. Similarly, the HP compressor 116 includes sequential stages of HP compressor stator vanes 186 and HP compressor blades 188 that progressively compress the second portion of air 160 even further. The HP compressor blades 188 are mechanically coupled to the HP shaft 128. The compressed second portion of air 160 is then discharged from the compressor section 112 into the combustion section 118.

The compressed second portion of air 160 discharged from the compressor section 112 mixes with fuel and is burned within a combustor of the combustion section 118 to provide combustion gases 162. The combustion gases 162 are routed from the combustion section 118 along a hot gas path 174 of the core air flowpath 132 through the HP turbine 122 where a portion of thermal and/or kinetic energy from the combustion gases 162 is extracted via sequential stages of HP turbine stator vanes 164 and HP turbine blades 166. The HP turbine blades 166 are mechanically coupled to the HP shaft 128. Thus, when the HP turbine blades 166 extract energy from the combustion gases 162, the HP shaft 128 rotates, thereby supporting operation of the HP compressor 116. The combustion gases 162 are routed through the LP turbine 124 where a second portion of thermal and kinetic energy is extracted from the combustion gases 162 via sequential stages of LP turbine stator vanes 168 and LP turbine blades 170. The LP turbine blades 170 are coupled to the LP shaft 130. Thus, when the LP turbine blades 170 extract energy from the combustion gases 162, the LP shaft 130 rotates, thereby supporting operation of the LP compressor 114, as well as the fan 134 by way of the power gearbox 142.

The combustion gases 162 exit the LP turbine 124 and are exhausted from the core turbine engine 106 through the exhaust section 126 to provide propulsive thrust. Simultaneously, the pressure of the first portion of air 158 is substantially increased as the first portion of air 158 is routed through the bypass passage 152 before the first portion of air 158 is exhausted from a fan nozzle exhaust section 172 of the turbofan engine 100, also providing propulsive thrust. The HP turbine 122, the LP turbine 124, and the exhaust section 126 at least partially define the hot gas path 174.

It will be appreciated that the turbofan engine 100 depicted in FIG. 1 is provided by way of example, and that in other example embodiments, the turbofan engine 100 may have other configurations. Additionally, or alternatively, aspects of the present disclosure may be utilized with any other suitable aeronautical turbofan engine, such as a turboshaft engine, turboprop engine, turbojet engine, etc.

As further shown in FIG. 1, the turbofan engine 100 includes a thermal management system 200 (shown schematically in FIG. 1). The thermal management system 200 includes a thermal transport bus for transporting thermal energy in a controlled manner between heat-source heat exchanger(s) and heat-sink heat exchanger(s) using a working fluid as the heat transfer medium. The heat-source heat exchanger(s) transfer heat load from hot fluid(s) to the working fluid, and the heated working fluid then transports the heat load to the heat-sink heat exchanger(s), where the heat load is finally transferred to cold fluid(s), and the cycle repeats.

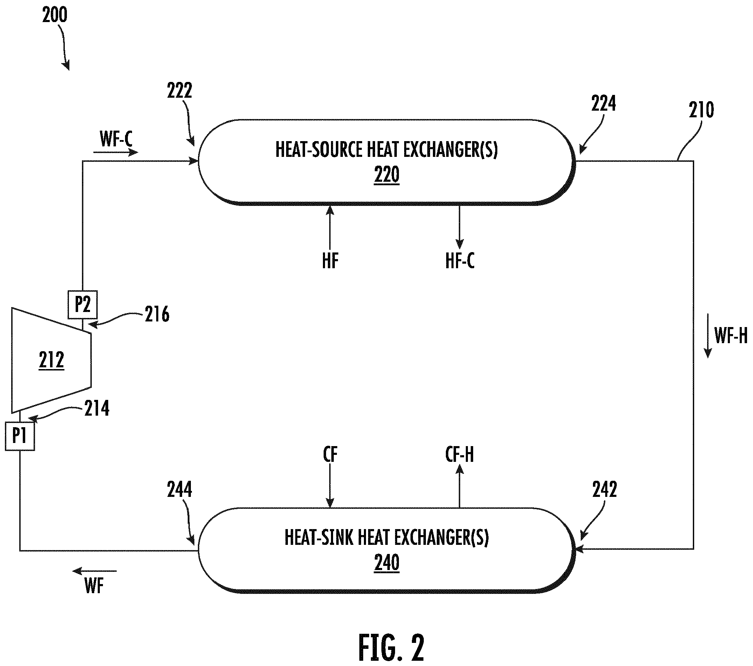

FIG. 2 provides a schematic diagram of the thermal management system 200 of the turbofan engine 100 of FIG. 1. As shown, the thermal management system 200 includes a thermal transport bus 210. The thermal transport bus 210 is formed of one or more fluid conduits along which a working fluid WF is movable. In this example embodiment, the working fluid is supercritical carbon dioxide. A pump 212 is positioned along the thermal transport bus 210 and is operable to move or urge the working fluid WF along the thermal transport bus 210. The pump 212 has a pump inlet 214 and a pump outlet 216. For this embodiment, the thermal transport bus 210 is configured in a closed-cycle loop configuration. Accordingly, the working fluid WF is recirculated through the thermal transport bus 210.

As further shown in FIG. 2, the thermal management system 200 includes one or more heat-source heat exchangers 220 positioned along the thermal transport bus 210. The one or more heat-source heat exchangers 220 have an overall inlet 222 and an overall outlet 224. The thermal management system 200 also includes one or more heat-sink heat exchangers 240 arranged in fluid communication with the one or more heat-source heat exchangers 220. The one or more heat-sink heat exchangers 240 have an overall inlet 242 and an overall outlet 244. The one or more heat-source heat exchangers 220 are positioned along the thermal transport bus 210 between the pump 212 and the one or more heat-sink heat exchangers 240. The one or more heat-sink heat exchangers 240 are positioned along the thermal transport bus 210 between the pump 212 and the one or more heat-source heat exchangers 220.

The terms "overall" inlet and outlet refer, respectively, to the inlet and outlet from one or more heat exchangers, represented schematically in FIG. 2 by inlet 222 and outlet 224 for the one or more heat-source heat exchangers 220 and inlet 242 and outlet 244 for the one or more heat-sink heat exchangers 240. Generally, the overall inlet of one or more heat exchangers represents a furthest upstream inlet of the one or more heat exchangers, while the overall outlet of the one or more heat exchangers represents a furthest downstream outlet of the one or more heat exchangers.

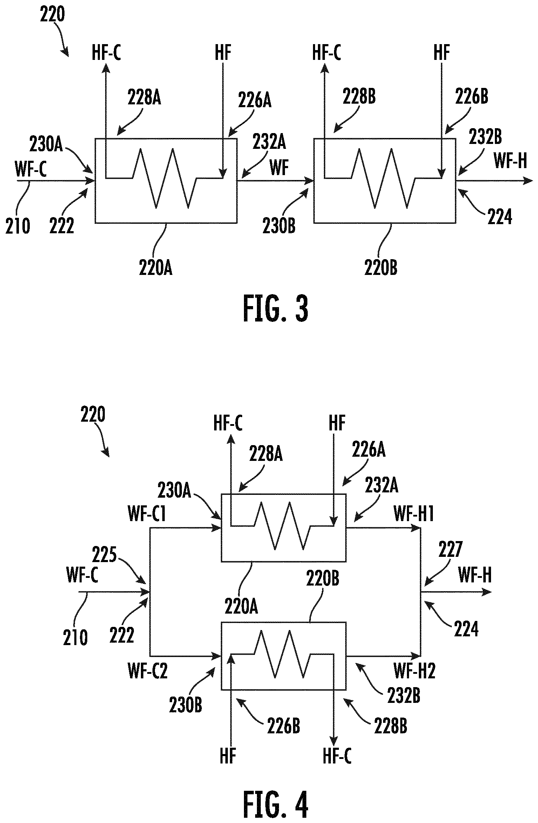

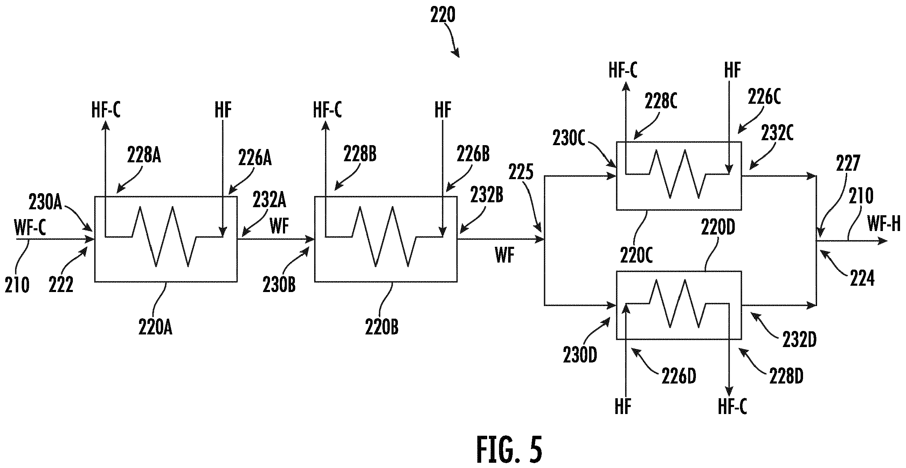

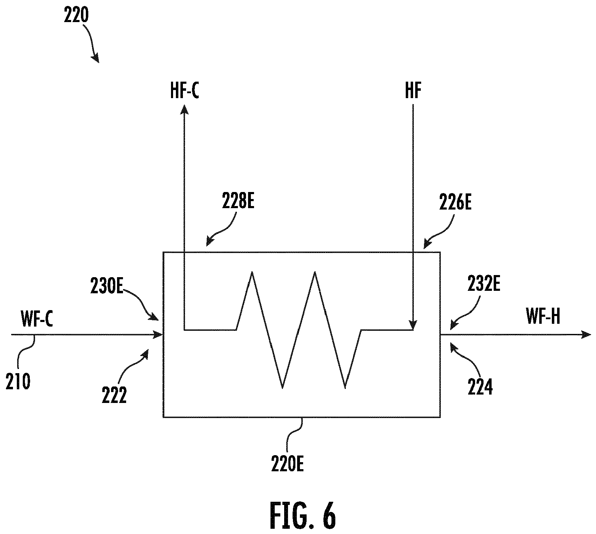

For instance, in embodiments in which the one or more heat-source exchangers 220 include a single heat-source heat exchanger (e.g., FIG. 6) or in which a furthest upstream heat-source heat exchanger is arranged in series with one or more downstream heat-source heat exchangers (e.g., FIGS. 3 and 5), the overall inlet is the same as the inlet of the single heat-source heat exchanger (e.g., first working fluid inlet 230E in FIG. 6) or the inlet of the furthest upstream heat-source heat exchanger (e.g., first working fluid inlet 230A in FIGS. 3 and 5). For embodiments in which the one or more heat-source exchangers 220 include at least two heat-source heat exchangers arranged in parallel immediately downstream of an input line of the thermal transport bus 210 (e.g., FIG. 4), the overall inlet is a furthest upstream inlet junction (e.g., inlet junction 225 in FIG. 4).

Further, in embodiments in which the one or more heat-source exchangers 220 include a single heat-source heat exchanger (e.g., FIG. 6) or in which a furthest downstream heat-source heat exchanger is arranged in series with one or more upstream heat-source heat exchangers (e.g., FIG. 3), the overall outlet is the same as the outlet of the single heat-source heat exchanger (e.g., working fluid outlet 232E in FIG. 6) or the outlet of the furthest downstream heat-source heat exchanger (e.g., working fluid outlet 232B in FIG. 3). For embodiments in which the one or more heat-source exchangers 220 include at least two heat-source heat exchangers arranged in parallel immediately upstream of an output line of the thermal transport bus 210 (e.g., FIGS. 4 and 5), the overall outlet is a furthest downstream outlet junction (outlet junction 227 in FIGS. 4 and 5)

The pump 212 moves relatively cool working fluid WF-C, to the one or more heat-source heat exchangers 220. One or more hot fluids HF are directed to the one or more heat-source heat exchangers 220 so that the one or more hot fluids HF impart thermal energy to the relatively cool working fluid WF-C. In this regard, the one or more heat-source heat exchangers 220 transfer heat load from the one or more hot fluids HF to the relatively cool working fluid WF-C. Examples of hot fluids HF include air bled from the HP compressor 116 (FIG. 1), exhaust gas taken from the exhaust section 126 (FIG. 1), lubrication oil, etc. After imparting thermal energy to the relatively cool working fluid WF-C to render it relatively hot working fluid WF-H, the relatively cool one or more hot fluids HF-C can be directed back to their source, or to another section of the turbofan engine 100 (FIG. 1), e.g., cooled lubricant returned to a gearbox or bearing sump, or cooled compressor bleed air directed downstream to a turbine airfoil.

The relatively hot working fluid WF-H heated by the one or more heat-source heat exchangers 220 is moved along the thermal transport bus 210 to the one or more heat-sink heat exchangers 240. One or more cold fluids CF are directed to the one or more heat-sink heat exchangers 240 so that the relatively hot working fluid WF-H imparts thermal energy to the cold fluids CF. In this regard, the relatively hot working fluid WF-H transports the heat load to the one or more cold fluids CF at the one or more heat-sink heat exchangers 240. Examples of cold fluids CF include fuel, liquid hydrogen, etc. After being heated by the relatively hot working fluid WF-H, the now relatively hot cold fluids CF-H can be directed to one or more destinations. For example, cold fuel pre-heated by the relatively hot working fluid WF-H can be directed to the combustion section 118 to be combusted. After exiting the one or more heat-sink heat exchangers 240, the working fluid WF is recirculated back to the pump 212 and the heat transfer cycle repeats.

FIG. 3 provides a schematic view of one example arrangement of the one or more heat-source heat exchangers 220 that can be implemented in the thermal management system 200 of FIG. 2. For this embodiment, the one or more heat-source heat exchangers 220 are series-arranged heat-source heat exchangers. Particularly, for the depicted embodiment of FIG. 3, the one or more heat-source heat exchangers 220 include a first heat-source heat exchanger 220A arranged in series with a second heat-source heat exchanger 220B. In other example embodiments, the one or more heat-source heat exchangers 220 can include more than two (2) series-arranged heat-source heat exchangers.

As shown in FIG. 3, the first heat-source heat exchanger 220A has a first hot fluid inlet 226A through which hot fluid HF enters the first heat-source heat exchanger 220A and a first hot fluid outlet 228A through which relatively cool hot fluid HF-C exits the first heat-source heat exchanger 220A. The first heat-source heat exchanger 220A has a first working fluid inlet 230A through which relatively cool working fluid WF-C enters the first heat-source heat exchanger 220A. For this embodiment, the first working fluid inlet 230A is also the overall inlet 222 of the one or more heat-source heat exchangers 220. The first heat-source heat exchanger 220A also has a first working fluid outlet 232A through which working fluid WF, which has been heated by the hot fluid HF, exits the first heat-source heat exchanger 220A.

The second heat-source heat exchanger 220B has a second hot fluid inlet 226B through which hot fluid HF enters the second heat-source heat exchanger 220B and a second hot fluid outlet 228B through which relatively cool hot fluid HF-C exits the second heat-source heat exchanger 220B. The second heat-source heat exchanger 220B has a second working fluid inlet 230B through which the working fluid heated by the first heat-source heat exchanger 220A enters the second heat-source heat exchanger 220B. The second heat-source heat exchanger 220B also has a second working fluid outlet 232B through which relatively hot working fluid WF-H exits the second heat-source heat exchanger 220B. For this embodiment, the second working fluid outlet 232B is also the overall outlet 224 of the one or more heat-source heat exchangers 220.

FIG. 4 provides a schematic view of another example arrangement of the one or more heat-source heat exchangers 220 that can be implemented in the thermal management system 200 of FIG. 2. For this embodiment, the one or more heat-source heat exchangers 220 are parallel-arranged heat-source heat exchangers. Particularly, for the depicted embodiment of FIG. 4, the one or more heat-source heat exchangers 220 include a first heat-source heat exchanger 220A arranged in parallel with a second heat-source heat exchanger 220B. In other example embodiments, the one or more heat-source heat exchangers 220 can include more than two (2) parallel-arranged heat-source heat exchangers.

As shown in FIG. 4, the relatively cool working fluid WF-C splits at an inlet junction 225 into a first flow of relatively cool working fluid WF-C1 directed to the first heat-source heat exchanger 220A and a second flow of relatively cool working fluid WF-C2 directed to the second heat-source heat exchanger 220B. The inlet junction 225 where the relatively cool working fluid WF-C splits is the overall inlet 222 of the one or more heat-source heat exchangers 220. The first flow of relatively cool working fluid WF-C1 heated at the first heat-source heat exchanger 220A exits the first heat-source heat exchanger 220A as a first flow of relatively hot working fluid WF-H1. The second flow of relatively cool working fluid WF-C2 heated at the second heat-source heat exchanger 220B exits the second heat-source heat exchanger 220B as a second flow of relatively hot working fluid WF-H2. The first and second flows of relatively hot working fluid WF-H1, WF-H2 from both the first and second heat-source heat exchangers 220A, 220B recombine at an outlet junction 227, which is the overall outlet 224 of the one or more heat-source heat exchangers 220 in this example embodiment. In some embodiments, the first flow of relatively cool working fluid WF-C1 directed to the first heat-source heat exchanger 220A and the second flow of relatively cool working fluid WF-C2 directed to the second heat-source heat exchanger 220B have different flows or mass flow rates. In yet other embodiments, the first flow of relatively cool working fluid WF-C1 and the second flow of relatively cool working fluid WF-C2 can have a same flow or same mass flow rates.

As further depicted in FIG. 4, the first heat-source heat exchanger 220A has a first hot fluid inlet 226A through which hot fluid HF enters the first heat-source heat exchanger 220A and a first hot fluid outlet 228A through which relatively cool hot fluid HF-C exits the first heat-source heat exchanger 220A. Further, the first heat-source heat exchanger 220A has a first working fluid inlet 230A through which the first flow of relatively cool working fluid WF-C1 enters the first heat-source heat exchanger 220A. The first heat-source heat exchanger 220A also has a first working fluid outlet 232A through which working fluid, which has been heated by the hot fluid HF, exits the first heat-source heat exchanger 220A as the first flow of relatively hot working fluid WF-H1.

The second heat-source heat exchanger 220B has a second hot fluid inlet 226B through which hot fluid HF enters the second heat-source heat exchanger 220B and a second hot fluid outlet 228B through which relatively cool hot fluid HF-C exits the second heat-source heat exchanger 220B. In addition, the second heat-source heat exchanger 220B has a second working fluid inlet 230B through which the second flow of relatively cool working fluid WF-C2 enters the second heat-source heat exchanger 220B. The second heat-source heat exchanger 220B also has a second working fluid outlet 232B through which working fluid, which has been heated by the hot fluid HF, exits the second heat-source heat exchanger 220B as the second flow of relatively hot working fluid WF-H2.

FIG. 5 provides a schematic view of yet another example arrangement of the one or more heat-source heat exchangers 220 that can be implemented in the thermal management system 200 of FIG. 2. For this embodiment, the one or more heat-source heat exchangers 220 include both series-arranged and parallel-arranged heat-source heat exchangers. Particularly, for the depicted embodiment of FIG. 5, the one or more heat-source heat exchangers 220 include a first heat-source heat exchanger 220A arranged in series with a second heat-source heat exchanger 220B, as well as a third heat-source heat exchanger 220C arranged in parallel with a fourth heat-source heat exchanger 220D. In other example embodiments, the one or more heat-source heat exchangers 220 can include more or less than two (2) series-arranged heat-source heat exchangers and more than two (2) parallel-arranged heat-source heat exchangers. Further, for this embodiment, the third and fourth heat-source heat exchangers 220C, 220D are positioned downstream of the first and second heat-source heat exchangers 220A, 220B. However, in other example embodiments, the third and fourth heat-source heat exchangers 220C, 220D can be positioned upstream of the first and second heat-source heat exchangers 220A, 220B. Other example arrangements of heat-source heat exchangers are contemplated.

As shown in FIG. 5, the first and second heat-source heat exchangers 220A, 220B are similarly configured as the first and second heat-source heat exchangers of FIG. 3. Particularly, the first heat-source heat exchanger 220A has a first hot fluid inlet 226A, a first hot fluid outlet 228A, a first working fluid inlet 230A, and a first working fluid outlet 232A. For this embodiment, the first working fluid inlet 230A is also the overall inlet 222 of the one or more heat-source heat exchangers 220. The second heat-source heat exchanger 220B has a second hot fluid inlet 226B, a second hot fluid outlet 228B, a second working fluid inlet 230B through which the working fluid heated by the first heat-source heat exchanger 220A enters the second heat-source heat exchanger 220B, and a second working fluid outlet 232B through which the working fluid WF heated by the second heat-source heat exchanger 220B exits the second heat-source heat exchanger 220B and flows downstream to the parallel-arranged, third and fourth heat-source heat exchangers 220C, 220D.

The third and fourth heat-source heat exchangers 220C, 220D are similarly configured as the first and second heat-source heat exchangers of FIG. 4. Particularly, the third heat-source heat exchanger 220C has a third hot fluid inlet 226C, a third hot fluid outlet 228C, a third working fluid inlet 230C through which a first flow of working fluid heated by the first and second heat-source heat exchangers 220A, 220B enters the third heat-source heat exchanger 220C after being split at the inlet junction 225, and a third working fluid outlet 232C through which working fluid WF, which has been heated by the hot fluid HF flowing through the third heat-source heat exchanger 220C, exits the third heat-source heat exchanger 220C. The fourth heat-source heat exchanger 220D has a fourth hot fluid inlet 226D, a fourth hot fluid outlet 228D, a fourth working fluid inlet 230D through which a second flow of working fluid heated by the first and second heat-source heat exchangers 220A, 220B enters the fourth heat-source heat exchanger 220D after being split at the inlet junction 225, and a fourth working fluid outlet 232D through which working fluid WF, which has been heated by the hot fluid HF flowing through the fourth heat-source heat exchanger 220D, exits the fourth heat-source heat exchanger 220D. The working fluid WF heated by the third and fourth heat-source heat exchangers 220C, 220D exit their respective third and fourth heat-source heat exchangers 220C, 220D as first and second flows of relatively hot working fluid and combine at the outlet junction 227. For this embodiment, the outlet junction 227 is also the overall outlet 224 of the one or more heat-source heat exchangers 220. As depicted in FIG. 5, the relatively hot working fluid WF-H exits through the overall outlet 224 and continues downstream along the thermal transport bus 210 to transport the heat load to the one or more heat-sink heat exchangers 240 (FIG. 2).

It will be appreciated that the depicted embodiments of FIGS. 3, 4, and 5 are provided for example purposes and are not intended to be limiting. In some embodiments, for example, the one or more heat-source heat exchangers 220 can include or be a single heat-source heat exchanger. For instance, FIG. 6 depicts the one or more heat-source heat exchangers 220 including or being a single heat-source heat exchanger 220E. The single heat-source heat exchanger 220E can be implemented in the thermal management system 200 of FIG. 2. As shown in FIG. 6, the single heat-source heat exchanger 220E has a hot fluid inlet 226E through which hot fluid HF enters the single heat-source heat exchanger 220E and a hot fluid outlet 228E through which relatively cool hot fluid HF-C exits the single heat-source heat exchanger 220E. In addition, the single heat-source heat exchanger 220E has a working fluid inlet 230E through which relatively cool working fluid WF-C enters the single heat-source heat exchanger 220E. The working fluid inlet 230E is also the overall inlet 222 of the heat-source heat exchanger 220 in this example. The single heat-source heat exchanger 220E also has a working fluid outlet 232E through which working fluid, which has been heated by the hot fluid HF, exits the single heat-source heat exchanger 220E as relatively hot working fluid WF-H. The working fluid outlet 232E is also the overall outlet 224 of the heat-source heat exchanger 220 in this example.

The one or more heat-sink heat exchangers 240 can be configured in a same or similar manner as the one or more heat-source heat exchangers 220 depicted in FIGS. 3, 4, 5, and/or 6, or in other arrangements. Although, as will be appreciated, cold fluids circulate through the one or more heat-sink heat exchangers 240 rather than hot fluids as in the one or more heat-source heat exchangers 220. That is, fluids that are relatively cool with respect to the heated working fluid are circulated through the one or more heat-sink heat exchangers 240 so that the heated working fluid can impart heat to the relatively cold fluids.

As alluded to earlier, the inventors discovered, unexpectedly during the course of engine design, that a relationship exists between a turbofan engine's propulsion capability and capability of a thermal transport bus of the turbofan engine to process heat load. A turbofan engine's propulsion capability is represented herein by a propulsive effectiveness factor that relates a fan diameter, an axial length, and a bypass ratio of the turbofan engine. The capability of a thermal transport bus to process heat load is represented herein by a heat load factor that relates an average specific heat capacity of the working fluid moving along the thermal transport bus between an overall inlet and an overall outlet of one or more heat-source heat exchangers, a temperature difference between the working fluid at the overall inlet and the overall outlet, a pressure drop across the thermal transport bus, a density of the working fluid at the overall inlet, an overall effectiveness of the one or more heat-source heat exchangers, a critical temperature of the working fluid, an ambient temperature, and an overall inlet temperature of the working fluid at the overall inlet (the temperature of the working fluid at the overall inlet of the one or more heat exchangers is denoted herein as the "overall inlet temperature"). The relationship between a turbofan engine's propulsion capability and capability of a thermal transport bus of the turbofan engine to process heat load is captured by a thermal transport bus capacity.

A higher thermal transport bus capacity implies a higher capacity of a thermal transport bus to process a heat load. A turbofan engine's propulsive effectiveness factor increases as the fan diameter and bypass ratio increase and engine length reduce. A heat load factor associated with a thermal transport bus increases with a higher overall temperature difference between an overall inlet and overall outlet of the heat-source heat exchangers, higher overall effectiveness of the heat-source heat exchangers, lower pressure-drop across the thermal transport system, and lower overall inlet temperature of the heat-source heat exchangers. The combination of higher propulsive effectiveness factor and heat load factor leads to increased thermal transport bus capacity, which may lead to increased potential for the thermal transport bus to transport more heat load at lower operating cost and higher engine efficiency.

The inventors found that a thermal transport bus having a thermal transport bus capacity operating within ranges specified herein provides a thermal transport bus that effectively manages heat loads generated by turbofan engines disclosed herein, including turbofan engines that are more fuel efficient, produce higher thrust, and/or are quieter turbofan engines that produce less carbon dioxide emissions relative to conventional turbofan engines. The ranges of thermal transport bus capacities noted below represent examples of engine designs that take into consideration the various benefits and penalties of choosing one structural turbofan architecture over another. In this regard, as discovered by the inventors, the ranges of thermal transport bus capacities provided herein strike a desired balance between certain architectural and operational characteristics of the turbofan engine, such as fan diameter, engine length, bypass ratio, the arrangement of the thermal transport bus and heat-source heat exchangers positioned along the thermal transport bus, the number and connection of the heat-source heat exchangers with one another, and the one or more pumps utilized to move working fluid along the thermal transport bus.

Further, utilizing the thermal transport bus capacity, the inventors found that the number of turbofan engine designs that allow a thermal transport bus to effectively process heat loads could be greatly diminished, which can facilitate a more rapid down selection of designs to consider as a turbofan engine is developed. Such a benefit provides more insight into the requirements for a given turbofan engine well before specific technologies, integration, and system requirements are developed fully. It may also prevent late-stage redesign. For instance, the thermal transport bus capacity may help in rapidly selecting the optimum design process condition for the thermal transport bus, which facilitates determining the allowable cycle loop pressure drop needed to size the one or more pumps of the thermal transport bus. The thermal transport bus capacity also helps in quickly identifying the needed heat-source heat exchanger efficiency needed to size the heat-exchangers to meet requirements.

Additionally, the inventors discovered that a relationship exists between the thermal transport bus capacity associated with a thermal transport bus of a turbofan engine and an overall inlet temperature of the working fluid at an overall inlet of one or more heat-source heat exchangers. The inventors observed that the thermal transport bus capacity increases exponentially up to the critical point of the working fluid as the overall inlet temperature decreases. Stated differently, the inventors observed that, as the overall inlet temperature increases, the thermal transport bus capacity decreases exponentially. This discovered relationship can be used advantageously to design turbofan engines and their associated thermal management systems having thermal transport buses.

With reference now to FIGS. 1 through 7, FIG. 7 lists various relationships between operational and architectural characteristics of a turbofan engine and thermal management system characteristics. These relationships will be explained in the context of the turbofan engine 100 of FIG. 1, but as will be appreciated, these relationships are applicable to turbofans having different configurations.

Notably, the turbofan engine 100 and the thermal transport bus 210 are arranged so that the thermal transport bus 210 has a thermal transport bus capacity *TTBC*. The thermal transport bus capacity *TTBC* is a dimensionless quantity that relates a propulsive effectiveness factor *PEF* associated with the turbofan engine 100 and a heat load factor *HLF* associated with the thermal transport bus 210. The thermal transport bus capacity *TTBC* provides a measure of the thermal power in the turbofan engine 100. A higher thermal transport bus capacity *TTBC* implies a higher capacity of the thermal transport bus 210 to process heat load. Conversely, a lower thermal transport bus capacity *TTBC* implies a lower capacity of the thermal transport bus 210 to process heat load.

As will be explained more fully below, the propulsive effectiveness factor *PEF* relates a fan diameter $D_{Fan}$ of the fan 134, an axial length $L_{Eng}$ of the turbofan engine 100, and a bypass ratio *BPR* of the turbofan engine 100. The heat load factor *HLF* relates an average specific heat capacity $cp_{AVG}$ of the working fluid WF between the overall inlet 222 and the overall outlet 224 of the one or more heat-source heat exchangers 220, a temperature difference $\Delta T$ between the working fluid WF at the overall inlet 222 and the overall outlet 224, a pressure drop $\Delta P$ across the thermal transport bus 210, a density $\rho_{Inlet}$ of the working fluid WF at the overall inlet 222, an overall effectiveness $\varepsilon_{HSHX}$ of the one or more heat-source heat exchangers 220, a critical temperature $T_{Crit}$ of the working fluid WF, an ambient temperature $T_{Amb}$, and an overall inlet temperature $T_{Inlet}$ of the working fluid WF at the overall inlet 222.

The thermal transport bus capacity *TTBC* is defined as a product determined by multiplying the propulsive effectiveness factor *PEF* associated with the turbofan engine 100 by the heat load factor *HLF* associated with the thermal transport bus 210:

$$TTBC = PEF * HLF \qquad (1)$$

Various fluid properties are used to calculate the thermal transport bus capacity *TTBC*. For instance, various fluid properties are used to calculate the heat load factor *HLF*. For calculating the thermal transport bus capacity *TTBC*, the fluid properties are obtained when a given turbofan engine is operating at a condition so that the working fluid flowing along the thermal transport bus is between 74 bar and 250 bar.

8

The propulsive effectiveness factor *PEF* of (1) provides a measure of a turbofan engine's propulsion capability. A higher propulsive effectiveness factor *PEF* implies high fuel efficiency and higher propulsive capability of the turbofan engine 100. As noted above, the propulsive effectiveness factor *PEF* relates the fan diameter $D_{Fan}$ of the fan 134, the axial length $L_{Eng}$ of the turbofan engine 100, and the bypass ratio *BPR* of the turbofan engine 100. The propulsive effectiveness factor *PEF* is defined as a product determined by multiplying a quotient by the bypass ratio *BPR* raised to a one-quarter power, the quotient being determined by dividing the fan diameter $D_{Fan}$ by the axial length $L_{Eng}$ of the turbofan engine 100. The propulsive effectiveness factor *PEF* is a dimensionless quantity. The propulsive effectiveness factor *PEF* is defined by the inventors as follows:

$$PEF = \frac{D_{Fan}}{L_{Eng}} * BPR^{1/4} \qquad (2)$$

The fan diameter $D_{FAN}$ is defined as a distance spanning between a leading edge tip of one fan blade 136 to a leading edge tip of a radially opposite fan blade 136. Stated another way, the fan diameter $D_{FAN}$ may be defined as a fan radius $R_{FAN}$ multiplied by two, or stated mathematically, as $D_{FAN} = R_{FAN} * 2$, wherein the fan radius $R_{FAN}$ spans from the longitudinal centerline 102 to a leading edge tip of one of the fan blades 136. The unit of measure of the fan diameter $D_{FAN}$ is meters (*m*). In some example embodiments, the fan diameter $D_{FAN}$ of the fan 134 of the turbofan engine 100 is between 0.5 m and 3.5 m. In instances in which the fan section 104 includes a plurality of fan stages, the fan diameter $D_{FAN}$ is to be determined based on the fan having the largest fan diameter.

The axial length $L_{Eng}$ of the turbofan engine 100 is a distance spanning between a forward flange 143 of the fan casing 145 and an aft flange 123 of a turbine rear frame 125 of the turbofan engine 100. The unit of measure of the axial length $L_{Eng}$ of the turbofan engine 100 is meters (*m*).

The bypass ratio *BPR* of the turbofan engine 100 is defined by a ratio of a mass flow rate of the first portion of air 158 flowing through the bypass passage 152 to a mass flow rate of the second portion of air 160 entering the core turbine engine 106 through the core inlet 110. The bypass ratio *BPR* is a dimensionless quantity. In some example embodiments, the bypass ratio *BPR* of the turbofan engine 100 may be between three and twenty (3-20). In other example embodiments, the bypass ratio *BPR* of the turbofan engine 100 may be between three and ten (3-10). In yet other embodiments, the bypass ratio *BPR* of the turbofan engine 100 may be between three and twelve and a half (3-12.5). In further example embodiments, the bypass ratio *BPR* of the turbofan engine 100 may be between ten and twenty (10-20).

The heat load factor *HLF* of (1) relates various characteristics associated with the thermal transport bus 210. The heat load factor *HLF* is defined as a first product raised to a power. The first product is determined by multiplying a first quotient by the overall effectiveness $\varepsilon_{HSHX}$ of the one or more heat-source heat exchangers 220. The first quotient is determined by dividing a second product by a second quotient. The second product is determined by multiplying the average specific heat capacity $cp_{AVG}$ of the working fluid WF between the overall inlet 222 and the overall outlet 224 by the temperature difference $\Delta T$ between the working fluid WF at the overall inlet 222 and the overall outlet 224. The second quotient is determined by dividing the pressure drop $\Delta P$ across the thermal transport bus 210 by the density $\rho_{Inlet}$ of the working fluid WF at the overall inlet 222. Referring again to FIG. 2, the pressure drop $\Delta P$ across the thermal transport bus 210 can be determined by comparing the pressure at a first point P1 along the thermal transport bus 210 with the pressure at a second point P2 along the thermal transport bus 210, wherein the first point is located between the pump 212 and the one or more heat-sink heat exchangers 240 and the second point P2 is located between the pump 212 and the one or more heat-source heat exchangers 220. More particularly, the first point P1 is located at the pump inlet 214 of the pump 212 and the second point P2 is located at the pump outlet 216 of the pump 212.

The power to which the first product is raised is determined by multiplying one-third by a third quotient, the third quotient being determined by dividing a first difference by a second difference. The first difference is determined by subtracting the ambient temperature $T_{Amb}$ from the critical temperature $T_{Crit}$ of the working fluid WF. The second difference is determined by subtracting the ambient temperature $T_{Amb}$ by the overall inlet temperature $T_{Inlet}$ of the working fluid WF at the overall inlet 222. As used herein, the critical temperature $T_{Crit}$ of the working fluid WF, or supercritical carbon dioxide, is taken as a constant at thirty-one degrees Celsius (31°C). The ambient temperature $T_{Amb}$ is taken as a constant at fifteen degrees Celsius (15°C). In this regard, the ambient temperature $T_{Amb}$ need not be calculated or determined; the ambient temperature $T_{Amb}$ is set at fifteen degrees Celsius (15°C) to calculate the heat load factor *HLF*. The overall inlet temperature $T_{Inlet}$ is taken as the temperature in degrees Celsius at the overall inlet 222 of the one or more heat-source heat exchangers 220.

The heat load factor *HLF* is a dimensionless quantity. The heat load factor *HLF* is defined by the inventors as follows:

$$HLF = \left( \frac{cp_{Avg} * \Delta T}{\frac{\Delta P}{\rho_{Inlet}}} * \varepsilon_{HSHX} \right)^{\frac{1}{3}\left(\frac{T_{Crit} - T_{Amb}}{T_{Inlet} - T_{Amb}}\right)} \tag{3}$$

The unit of measure for the average specific heat capacity $cp_{AVG}$ of the working fluid WF between the overall inlet 222 and the overall outlet 224 of the one or more heat-source heat exchangers 220 is Joules per kilogram-Celsius (*J/kg-C*). As one example, the average specific heat capacity $cp_{AVG}$ of the working fluid WF is determined by calculating the specific heat capacity of the working fluid WF (or WF-C) at the overall inlet 222, calculating the specific heat capacity of the working fluid WF (or WF-H) at the overall outlet 224, and then calculating the average between the calculated specific heat capacities.

The unit of measure for the temperature difference $\Delta T$ between the working fluid WF at the overall inlet 222 and the overall outlet 224 of the one or more heat-source heat exchangers 220 is degrees Celsius (°C). As one example, the temperature difference $\Delta T$ is determined by measuring the temperature of the working fluid WF (or WF-C) at the overall inlet 222, measuring the temperature of the working fluid WF (or WF-H) at the overall outlet 224, and then calculating the difference between the measured temperatures.

The unit of measure for the pressure drop $\Delta P$ across the thermal transport bus 210 is Pascals (*Pa*). As one example, the pressure drop $\Delta P$ across the thermal transport bus 210 is determined by measuring the pressure at the first point P1 positioned along the thermal transport bus 210, measuring the pressure at the second point P2 positioned along the thermal transport bus 210, and then calculating a difference between the pressure taken at the first point P1 and the pressure taken at the second point P2. As depicted in FIG. 2, the first point P1 is located between the pump 212 and the one or more heat-sink heat exchangers 240 and the second point P2 is located between the pump 212 and the one or more heat-source heat exchangers 220. More specifically, the first point P1 is located at the pump inlet 214 of the pump 212 and the second point P2 is located at the pump outlet 216 of the pump 212.

The unit of measure for the density $\rho_{Inlet}$ of the working fluid WF at the overall inlet 222 is kilograms per meters cubed (*kg/m³*). As one example, the density $\rho_{Inlet}$ of the working fluid WF at the overall inlet 222 can be measured, e.g., by a hydrometer, or calculated according to known methods.

The overall effectiveness $\varepsilon_{HSHX}$ of the one or more heat-source heat exchangers 220 is a dimensionless quantity. In some embodiments, the overall effectiveness $\varepsilon_{HSHX}$ of the one or more heat-source heat exchangers 220 is between 0 and 1. The method for determining the overall effectiveness $\varepsilon_{HSHX}$ of the one or more heat-source heat exchangers 220 depends on whether the one or more heat-source heat exchangers 220 include a single heat-source heat exchanger, are series-arranged heat-source heat exchangers, are parallel-arranged heat-source heat exchangers, or include a combination of series-arranged and parallel-arranged heat-source heat exchangers.

Where the one or more heat-source heat exchangers 220 include at least two heat-source heat exchangers, and the at least two heat-source heat exchangers are series-arranged heat-source heat exchangers, the overall effectiveness $\varepsilon_{HSHX}$ of the series-arranged heat-source heat exchangers is defined as a quotient determined by dividing a first sequence sum by a sum, wherein the sum is determined by adding a second sequence sum and a difference in temperature of a hot fluid at a hot fluid inlet of a last heat-source heat exchanger (i.e., a furthest downstream heat-source heat exchanger) of the one or more heat-source heat exchangers 220 in the series and the working fluid at the working fluid inlet of the last heat-source heat exchanger.

The first sequence sum is determined by summing a first sequence of first expressions. A given first expression of the first expressions is defined as a product determined by multiplying the effectiveness $\varepsilon_i$ of a given heat-source heat exchanger of the at least two heat-source heat exchangers arranged in series by a difference in temperature $\theta_i$ of a hot fluid at a hot fluid inlet of the given heat-source heat exchanger and the working fluid at a working fluid inlet of the given heat-source heat exchanger. The number of first expressions in the first sequence is equal to a number $n$ of heat-source heat exchangers of the at least two heat-source heat exchangers arranged in series.

The second sequence sum is determined by summing a second sequence of second expressions. A given second expression of the second expressions is defined as a product determined by multiplying the effectiveness $\varepsilon_i$ of the given heat-source heat exchanger by the difference in temperature $\theta_i$ of the hot fluid at the inlet of the given heat-source heat exchanger and the working fluid at the working fluid inlet of the given heat-source heat exchanger. The number of second expressions in the second sequence is equal to the number of heat-source heat exchangers of the at least two heat-source heat exchangers arranged in series.

Accordingly, for series-arranged heat-source heat exchangers, the overall effectiveness $\varepsilon_{HSHX}$ of the at least two series-arranged heat-source heat exchangers is defined by the inventors as follows:

$$\varepsilon_{HSHX} = \frac{\sum_i^n \varepsilon_i \theta_i}{\left(\sum_i^n \varepsilon_i \theta_i\right) + \theta_n} \qquad (4)$$

By way of example, the overall effectiveness $\varepsilon_{HSHX}$ of the series-arranged heat-source heat exchangers 220 of FIG. 3 is defined as set forth in (4.1):

$$\varepsilon_{HSHX} = \frac{(\varepsilon_1 \theta_1) + (\varepsilon_2 \theta_2)}{((\varepsilon_1 \theta_1) + (\varepsilon_2 \theta_2)) + \theta_2} \qquad (4.1)$$

The first sequence sum, which is equal to $(\varepsilon_1 \theta_1) + (\varepsilon_2 \theta_2)$ of (4.1), is determined by summing a first sequence of first expressions. The first expression is $\varepsilon_i \theta_i$ and the first sequence in this example is $(\varepsilon_1 \theta_1) + (\varepsilon_2 \theta_2)$. The first sequence includes a first expression associated with the first heat-source heat exchanger 220A and a first expression associated with the second heat-source heat exchanger 220B. The $\varepsilon_1$ of the first expression $(\varepsilon_1 \theta_1)$ associated with the first heat-source heat exchanger 220A represents the effectiveness of the first heat-source heat exchanger 220A and the $\theta_1$ of the first expression $(\varepsilon_1 \theta_1)$ associated with the first heat-source heat exchanger 220A represents the difference in temperature of the hot fluid HF at the hot fluid inlet 226A and the working fluid at the first working fluid inlet 230A. The $\varepsilon_2$ of the first expression $(\varepsilon_2 \theta_2)$ associated with the second heat-source heat exchanger 220B represents the effectiveness of the second heat-source heat exchanger 220B and the $\theta_2$ of the first expression $(\varepsilon_2 \theta_2)$ associated with the second heat-source heat exchanger 220B represents the difference in temperature of the hot fluid HF at the hot fluid inlet 226B and the working fluid at the second working fluid inlet 230B. Further, there are two (2) first expressions in the first sequence as the number $n$ of heat-source heat exchangers of the at least two series-arranged heat-source heat exchangers is equal to two (2) in this example.

The second sequence sum, which is equal to $(\varepsilon_1 \theta_1) + (\varepsilon_2 \theta_2)$ of (4.1), is determined by summing a second sequence of second expressions. The second expression is $\varepsilon_i \theta_i$ and the second sequence in this example is $(\varepsilon_1 \theta_1) + (\varepsilon_2 \theta_2)$. The second sequence includes a second expression associated with the first heat-source heat exchanger 220A and a second expression associated with the second heat-source heat exchanger 220B. The $\varepsilon_1$ of the second expression $(\varepsilon_1 \theta_1)$ associated with the first heat-source heat exchanger 220A represents the effectiveness of the first heat-source heat exchanger 220A and the $\theta_1$ of the second expression $(\varepsilon_1 \theta_1)$ associated with the first heat-source heat exchanger 220A represents the difference in temperature of the hot fluid HF at the hot fluid inlet 226A and the working fluid at the first working fluid inlet 230A. The $\varepsilon_2$ of the second expression $(\varepsilon_2 \theta_2)$ associated with the second heat-source heat exchanger 220B represents the effectiveness of the second heat-source heat exchanger 220B and the $\theta_2$ of the second expression $(\varepsilon_2 \theta_2)$ associated with the second heat-source heat exchanger 220B represents the difference in temperature of the hot fluid HF at the hot fluid inlet 226B and the working fluid at the second working fluid inlet 230B. There are two (2) second expressions in the second sequence as the number n of heat-source heat exchangers arranged in series is equal to two (2) in this example.

According to (4.1), the second sequence sum is added to the difference in temperature $\theta_2$ of the hot fluid HF at the hot fluid inlet 226B and the working fluid at the second working fluid inlet 230B of the last heat-source heat exchanger in the series of the at least two heat exchangers arranged in series. For the embodiment of FIG. 3, the last heat-source heat exchanger in the series is the second heat-source heat exchanger 220B. Once the sum of the second sequence sum and the difference in temperature of the hot fluid at the hot fluid inlet and the working fluid at the second working fluid inlet of the last heat-source heat exchanger in the series is determined, the first sequence sum is divided by the determined sum. The quotient is equal to the overall effectiveness $\varepsilon_{HSHX}$ of the at least two series-arranged heat-source heat exchangers of FIG. 3.

Where the one or more heat-source heat exchangers 220 include at least two heat-source heat exchangers, and the at least two heat-source heat exchangers are parallel-arranged heat-source heat exchangers, the overall effectiveness $\varepsilon_{HSHX}$ of the parallel-arranged heat-source heat exchangers is defined as a quotient determined by dividing a first sequence sum by a second sequence sum.

The first sequence sum is determined by summing a first sequence of first expressions. A given first expression of the first expressions is defined as a product determined by multiplying the effectiveness $\varepsilon_i$ of a given heat-source heat exchanger of the at least two parallel-arranged heat-source heat exchangers by a difference in temperature $\theta_i$ of a hot fluid at a hot fluid inlet and a working fluid at a working fluid inlet of the given heat-source heat exchanger by the mass flowrate $\dot{m}_{ti}$ of the working fluid WF through the given heat-source heat exchanger. The number of first expressions in the first sequence is equal to a number $n$ of heat-source heat exchangers of the at least two parallel-arranged heat-source heat exchangers.

The second sequence sum is determined by summing a second sequence of second expressions. A given second expression of the second expressions is defined as a product being determined by multiplying the difference in temperature $\theta_i$ of the hot fluid at the inlet and the working fluid at a working fluid inlet of the given heat-source heat exchanger by the mass flowrate $\dot{m}_{ti}$ of the working fluid through the given heat-source heat exchanger. The number of second expressions in the second sequence is equal to the number $n$ of heat-source heat exchangers of the one or more heat-source heat exchangers 220.

Accordingly, for parallel-arranged heat-source heat exchangers, the overall effectiveness $\varepsilon_{HSHX}$ of the at least two heat-source heat exchangers is defined by the inventors as follows:

$$\varepsilon_{HSHX} = \frac{\sum_i^n \varepsilon_i \theta_i \dot{m}_{ti}}{\sum_i^n \theta_i \dot{m}_{ti}} \qquad (5)$$

By way of example, the overall effectiveness $\varepsilon_{HSHX}$ of the parallel-arranged heat-source heat exchangers 220 of FIG. 4 is defined as set forth in (5.1):

$$\varepsilon_{HSHX} = \frac{(\varepsilon_1 \theta_1 \dot{m}_{t1}) + (\varepsilon_2 \theta_2 \dot{m}_{t2})}{(\theta_1 \dot{m}_{t1}) + (\theta_2 \dot{m}_{t2})} \qquad (5.1)$$

The first sequence sum, which is represented in (5.1) as $(\varepsilon_1 \theta_1 \dot{m}_{t1}) + (\varepsilon_2 \theta_2 \dot{m}_{t2})$, is determined by summing a first sequence of first expressions. The first expression is $\varepsilon_i \theta_i \dot{m}_{ti}$ and the first sequence in this example is $(\varepsilon_1 \theta_1 \dot{m}_{t1}) + (\varepsilon_2 \theta_2 \dot{m}_{t2})$. The first sequence includes a first expression associated with the first heat-source heat exchanger 220A and a first expression associated with the second heat-source heat exchanger 220B. The $\varepsilon_1$ of the first expression $(\varepsilon_1 \theta_1 \dot{m}_{t1})$ associated with the first heat-source heat exchanger 220A represents the effectiveness of the first heat-source heat exchanger 220A, the $\theta_1$ represents the difference in temperature of the hot fluid HF at the hot fluid inlet 226A and the working fluid at the first working fluid inlet 230A, and the $\dot{m}_{t1}$ represents mass flowrate of the working fluid WF through the first heat-source heat exchanger 220A of FIG. 4. The $\varepsilon_2$ of the first expression $(\varepsilon_2 \theta_2 \dot{m}_{t2})$ associated with the second heat-source heat exchanger 220B of FIG. 4 represents the effectiveness of the second heat-source heat exchanger 220B, the $\theta_2$ represents the difference in temperature of the hot fluid HF at the hot fluid inlet 226B and the working fluid at the second working fluid inlet 230B, and the $\dot{m}_{t2}$ represents mass flowrate of the working fluid WF through the second heat-source heat exchanger 220B of FIG. 4. Further, there are two (2) first expressions in the first sequence as the number n of heat-source heat exchangers arranged in parallel is equal to two (2) in this example.

The second sequence sum, which is represented in (5.1) as $(\theta_1 \dot{m}_{t1}) + (\theta_2 \dot{m}_{t2})$, is determined by summing a second sequence of second expressions. The second expression is $\theta_i \dot{m}_{ti}$ and the second sequence in this example is $(\theta_1 \dot{m}_{t1}) + (\theta_2 \dot{m}_{t2})$. The second sequence includes a second expression associated with the first heat-source heat exchanger 220A and a second expression associated with the second heat-source heat exchanger 220B. The $\theta_1$ of the second expression $(\theta_1 \dot{m}_{t1})$ associated with the first heat-source heat exchanger 220A represents the difference in temperature of the hot fluid HF at the hot fluid inlet 226A and the working fluid at the first working fluid inlet 230A and the $\dot{m}_{t1}$ represents mass flowrate of the working fluid WF through the first heat-source heat exchanger 220A of FIG. 4. The $\theta_2$ of the second expression $(\theta_2 \dot{m}_{t2})$ associated with the second heat-source heat exchanger 220B of FIG. 4 represents the difference in temperature of the hot fluid HF at the hot fluid inlet 226B and the working fluid at the second working fluid inlet 230B and the $\dot{m}_{t2}$ represents mass flowrate of the working fluid WF through the second heat-source heat exchanger 220B of FIG. 4. Moreover, there are two (2) first expressions in the second sequence as the number $n$ of heat-source heat exchangers arranged in parallel is equal to two (2) in this example.

Where the heat-source heat exchangers 220 include both series-arranged and parallel-arranged heat-source heat exchangers, the overall effectiveness $\varepsilon_{HSHX}$ of the heat-source heat exchangers 220 is determined by using (4) and (5). By way of example, and with reference to the embodiment of FIG. 5, the overall effectiveness $\varepsilon_{HSHX}$ of the heat-source heat exchangers 220 can be determined in the following example manner. First, a resulting effectiveness associated with the parallel-arranged, third and fourth heat-source heat exchangers 220C, 220D can be determined using (5). Second, this resulting effectiveness of the parallel-arranged heat exchangers can be treated as an effectiveness of a pseudo-third heat-source heat exchanger arranged in series with the first and second heat-source heat exchangers 220A, 220B. Finally, the overall effectiveness $\varepsilon_{HSHX}$ for the first and second heat-source heat exchangers 220A, 220B and the pseudo-third heat-source heat exchanger can be determined using (4). For the pseudo-third heat-source heat exchanger in its application to (4), the difference in temperature $\theta_i$ between the hot fluid at the hot fluid inlet and working fluid at the working fluid inlet can be determined by taking the temperature difference between i) the average value of the hot fluid at the third hot fluid inlet 226C in the third heat-source heat exchanger 220C and the hot fluid at the fourth hot fluid inlet 226D in the fourth heat-source heat exchanger 220D, and ii) the average value of the working fluid at the third working fluid inlet 230C in the third heat-source heat exchanger 220C and the working fluid at the fourth working fluid inlet 230D in the fourth heat-source heat exchanger 220D. It will be appreciated that this noted process can be followed to determine the overall effectiveness $\varepsilon_{HSHX}$ of other combinations of series-arranged and parallel-arranged heat-source heat exchangers.

As explained above, the overall effectiveness $\varepsilon_{HSHX}$ of the one or more heat-source heat exchangers 220 is determined based at least in part on the effectiveness $\varepsilon_i$ of each one of the one or more heat-source heat exchangers 220. The effectiveness $\varepsilon_i$ or individual effectiveness of a given heat-source heat exchanger of the one or more heat-source heat exchangers 220 is defined as a quotient determined by dividing a first product by a second product.

The first product is determined by multiplying a mass flowrate $\dot{m}_{ti}$ of the working fluid WF through the given heat-source heat exchanger by a specific heat capacity $cp_{ti}$ of the working fluid WF at the given heat-source heat exchanger by a difference in temperature $\beta_i$ of the working fluid WF at a working fluid inlet and a working fluid outlet of the given heat-source heat exchanger. The second product is determined by multiplying a difference in temperature $\theta_i$ of a hot fluid at a hot fluid inlet and the working fluid at a working fluid inlet of the given heat-source heat exchanger by a minimum one of: i) a mass flowrate $\dot{m}_{Ti}$ of the hot fluid through the given heat-source exchanger multiplied by a specific heat capacity $cp_{Ti}$ of the hot fluid at the given heat-source heat exchanger; and ii) the mass flowrate $\dot{m}_{ti}$ of the working fluid WF through the given heat-source heat exchanger multiplied by the specific heat capacity $cp_{ti}$ of the working fluid WF at the given heat-source heat exchanger.

Accordingly, the effectiveness $\varepsilon_i$ of a given one of the one or more heat-source heat exchangers 220 is defined by the inventors as follows:

$$\varepsilon_i = \frac{\dot{m}_{ti} cp_{ti} \beta_i}{min(\dot{m}_{Ti} cp_{Ti}, \dot{m}_{ti} cp_{ti}) \theta_i} \qquad (6)$$

By way of example, the effectiveness $\varepsilon_1$ of the first heat-source heat exchanger 220A of FIG. 3 is defined as set forth in (6.1):

$$\varepsilon_1 = \frac{\dot{m}_{t1} cp_{t1} \beta_1}{min(\dot{m}_{T1} cp_{T1}, \dot{m}_{t1} cp_{t1}) \theta_1} \qquad (6.1)$$

The effectiveness $\varepsilon_1$ or individual effectiveness of the first heat-source heat exchanger 220A is defined as a quotient determined by dividing a first product by a second product. The first product is determined by multiplying the mass flowrate $\dot{m}_{t1}$, of the working fluid WF through the first heat-source heat exchanger 220A by a specific heat capacity $cp_{t1}$ of the working fluid WF at the first heat-source heat exchanger 220A by a difference in temperature $\beta_1$ of the working fluid WF at the first working fluid inlet 230A and the first working fluid outlet 232A. The second product is determined by multiplying a difference in temperature $\theta_1$ of the hot fluid HF at the first hot fluid inlet 226A and the working fluid at the first working fluid inlet 230A of the first heat-source heat exchanger 220A by a minimum one of: i) a mass flowrate $\dot{m}_{T1}$ of the hot fluid HF through the first heat-source heat exchanger 220A multiplied by the specific heat capacity $cp_{T1}$ of the hot fluid HF at the first heat-source heat exchanger 220A; and ii) the mass flowrate $\dot{m}_{t1}$ of the working fluid WF through the first heat-source heat exchanger 220A multiplied by the specific heat capacity $cp_{t1}$ of the working fluid WF at the first heat-source heat exchanger 220A.

The effectiveness $\varepsilon_i$ of other heat-source heat exchangers, such as those depicted in FIGS. 3, 4, and 5, can be calculated in a similar manner as explained above with respect to the first heat-source heat exchanger 220A of FIG. 3. Moreover, in embodiments where the one or more heat-source heat exchangers 220 include only a single heat-source heat exchanger, such as in the depicted embodiment of FIG. 6, the overall effectiveness $\varepsilon_{HSHX}$ is equal to the effectiveness $\varepsilon_i$ of the single heat-source heat exchanger.

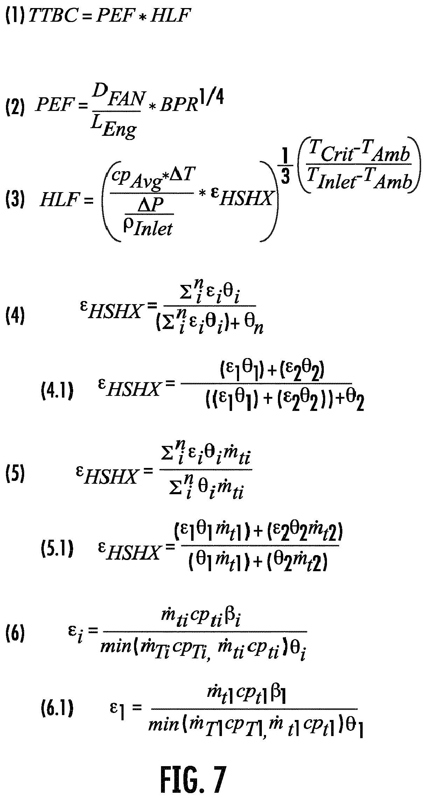

In some embodiments, the thermal transport bus capacity *TTBC* is between 0.07 and 33.65 for the overall inlet temperature $T_{Inlet}$ of the working fluid WF at the overall inlet 222 being between 31 and 200 degrees Celsius and the propulsive effectiveness factor *PEF* being between 0.52 and 1.37. FIG. 7 graphically depicts the thermal transport bus capacity *TTBC* as a function of the overall inlet temperature $T_{Inlet}$ of the working fluid WF at the overall inlet 222 for such example embodiments.

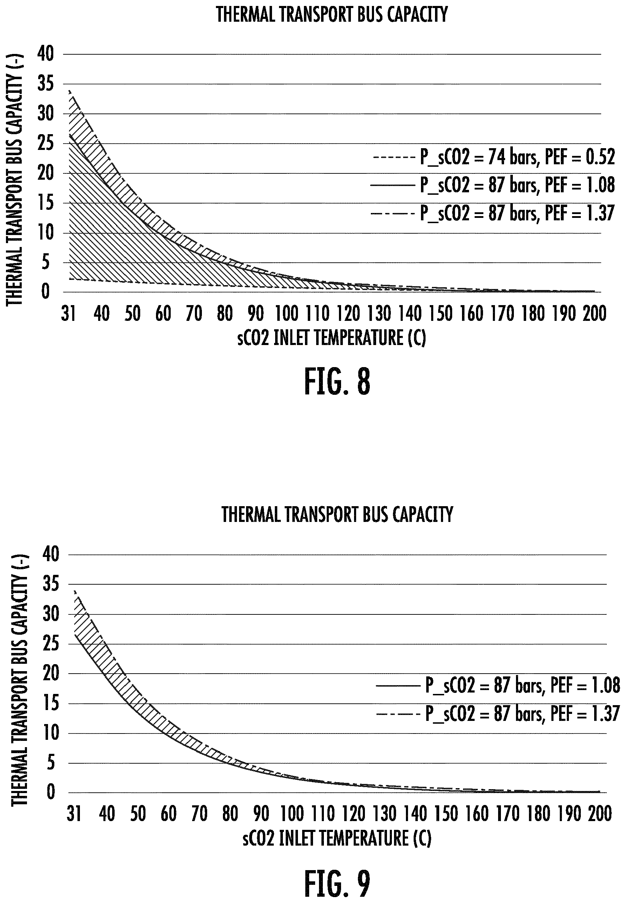

In other embodiments, the thermal transport bus capacity *TTBC* is between 0.07 and 33.65 for the overall inlet temperature $T_{Inlet}$ of the working fluid WF at the overall inlet 222 being between 31 and 200 degrees Celsius and the propulsive effectiveness factor *PEF* being between 1.08 and 1.37. FIG. 8 graphically depicts the thermal transport bus capacity *TTBC* as a function of the overall inlet temperature $T_{Inlet}$ of the working fluid WF at the overall inlet 222 for such example embodiments.

In some other embodiments, the thermal transport bus capacity *TTBC* is between 0.07 and 26.48 for the overall inlet temperature $T_{Inlet}$ of the working fluid WF at the overall inlet 222 being between 31 and 200 degrees Celsius and the propulsive effectiveness factor $PEF$ being between 0.52 and 1.08. FIG. 9 graphically depicts the thermal transport bus capacity $TTBC$ as a function of the overall inlet temperature $T_{Inlet}$ of the working fluid WF at the overall inlet 222 for such example embodiments.

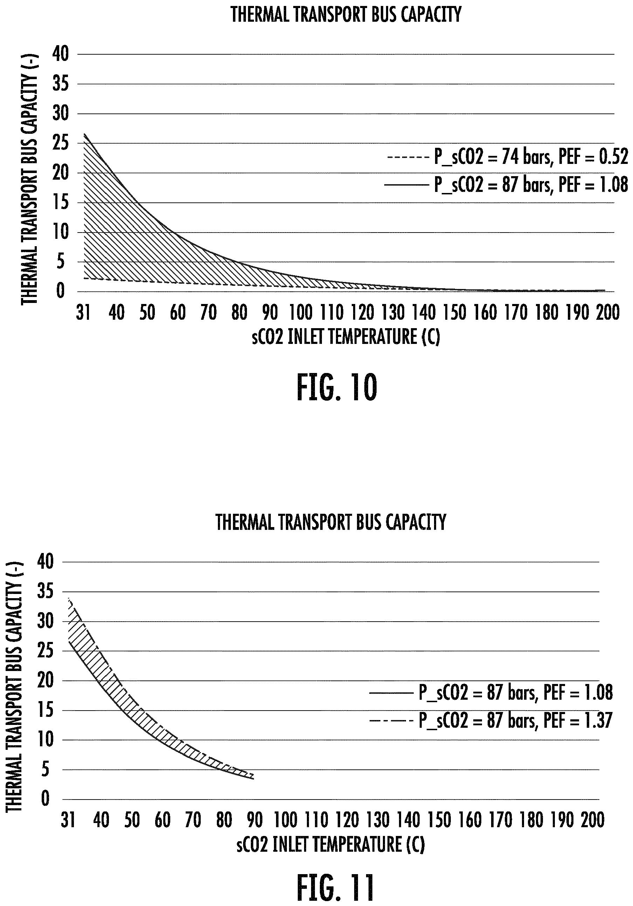

In some further embodiments, the thermal transport bus capacity $TTBC$ is between 3.34 and 33.65 for the overall inlet temperature $T_{Inlet}$ of the working fluid WF at the overall inlet 222 being between 31 and 90 degrees Celsius and the propulsive effectiveness factor $PEF$ being between 1.08 and 1.37. FIG. 10 graphically depicts the thermal transport bus capacity $TTBC$ as a function of the overall inlet temperature $T_{Inlet}$ of the working fluid WF at the overall inlet 222 for such example embodiments.

In yet other embodiments, the thermal transport bus capacity $TTBC$ is between 0.07 and 4.24 for the overall inlet temperature $T_{Inlet}$ of the working fluid WF at the overall inlet 222 being between 90 and 200 degrees Celsius and the propulsive effectiveness factor $PEF$ being between 1.08 and 1.37. FIG. 11 graphically depicts the thermal transport bus capacity $TTBC$ as a function of the overall inlet temperature $T_{Inlet}$ of the working fluid WF at the overall inlet 222 for such example embodiments.

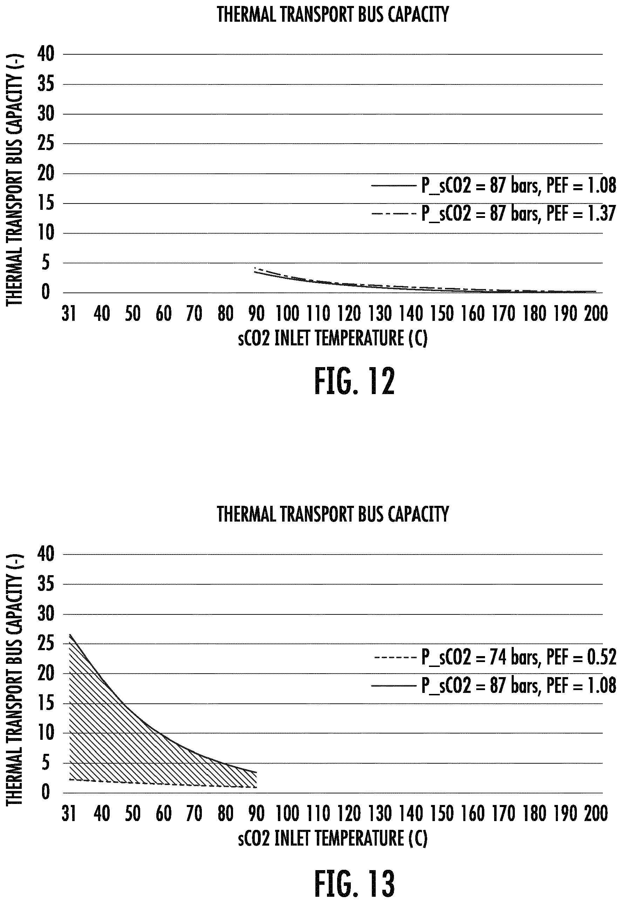

In some further embodiments, the thermal transport bus capacity $TTBC$ is between 0.96 and 26.48 for the overall inlet temperature $T_{Inlet}$ of the working fluid WF at the overall inlet 222 being between 31 and 90 degrees Celsius and the propulsive effectiveness factor $PEF$ being between 0.52 and 1.08. FIG. 12 graphically depicts the thermal transport bus capacity $TTBC$ as a function of the overall inlet temperature $T_{Inlet}$ of the working fluid WF at the overall inlet 222 for such example embodiments.

In some other embodiments, the thermal transport bus capacity $TTBC$ is between 0.07 and 3.34 for the overall inlet temperature $T_{Inlet}$ of the working fluid WF at the overall inlet 222 being between 90 and 200 degrees Celsius and the propulsive effectiveness factor $PEF$ being between 0.52 and 1.08. FIG. 13 graphically depicts the thermal transport bus capacity $TTBC$ as a function of the overall inlet temperature $T_{Inlet}$ of the working fluid WF at the overall inlet 222 for such example embodiments.

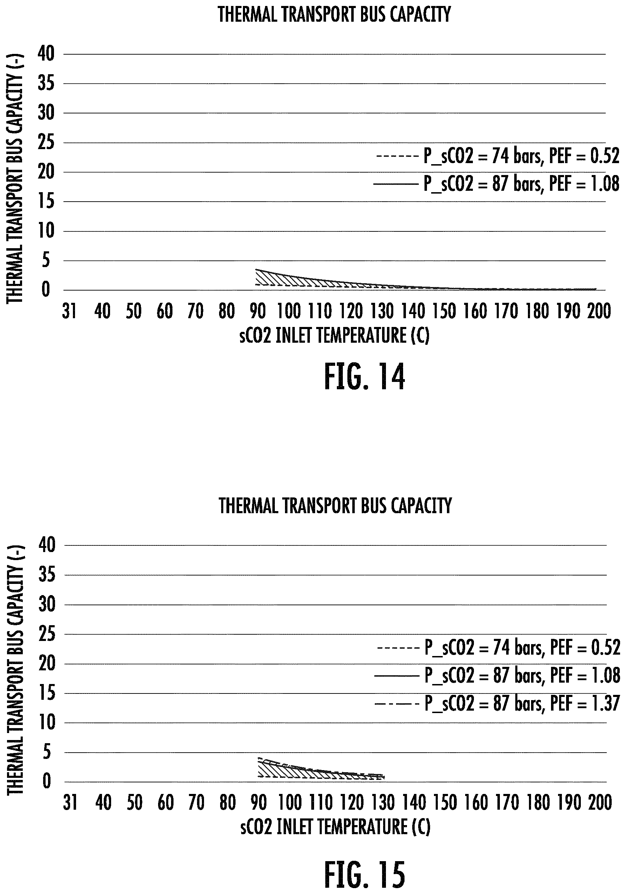

In yet other embodiments, the thermal transport bus capacity $TTBC$ is between 0.51 and 4.24 for the overall inlet temperature $T_{Inlet}$ of the working fluid WF at the overall inlet 222 being between 90 and 130 degrees Celsius and the propulsive effectiveness factor $PEF$ being between 0.52 and 1.37. FIG. 14 graphically depicts the thermal transport bus capacity $TTBC$ as a function of the overall inlet temperature $T_{Inlet}$ of the working fluid WF at the overall inlet 222 for such example embodiments.

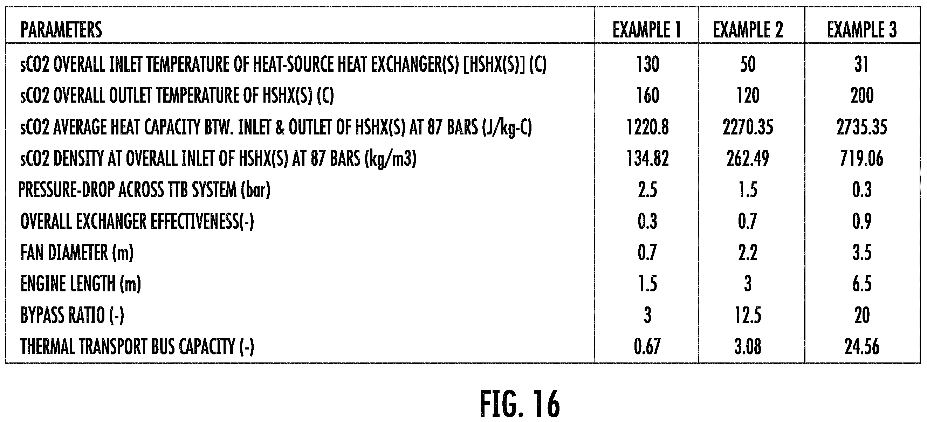

With reference now to FIG. 16, a table is provided listing various examples. For each example below, the fluid properties used to calculate the thermal transport bus capacity $TTBC$ were obtained when the noted turbofan engine was operating at a condition where the working fluid flowing along the thermal transport bus was between 74 bar and 250 bar. The ambient temperature was set at fifteen degrees Celsius (15°C) for normalization purposes.

EXAMPLE 1: In a first example, a turbofan engine has a fan and a core turbine engine. The turbofan engine also includes a thermal management system. The thermal management system includes a closed-cycle loop thermal transport bus along which a working fluid is moveable. The working fluid is supercritical carbon dioxide. One or more heat-source heat exchangers are positioned along the thermal transport bus. The one or more heat-source heat exchangers have an overall inlet upstream of any one of the heat-source heat exchangers and an overall outlet downstream of any one of the one or more heat-source heat exchangers. One or more heat-sink heat exchangers are also positioned along the thermal transport bus and are in fluid communication with the one or more heat-source heat exchangers via the thermal transport bus.

The turbofan engine is architecturally arranged so that the fan has a fan diameter $D_{FAN}$ of 0.7 m, the axial length $L_{Eng}$ of the turbofan engine is 1.5 m, and the bypass ratio $BPR$ of the turbofan engine is 3.0. The thermal transport bus and other components of the thermal management system are arranged and operational so that the overall inlet temperature $T_{Inlet}$ of the working fluid at the overall inlet of the one or more heat-source heat exchangers is 130°C and the overall outlet temperature of the working fluid at the overall inlet of the one or more heat-source heat exchangers is 160°C, thus the temperature difference $\Delta T$ between the working fluid at the overall inlet and the overall outlet of the one or more heat-source heat exchangers is 30°C. The temperature of the working fluid at the overall outlet of the one or more heat exchangers is denoted herein as the "overall outlet temperature". The average specific heat capacity $cp_{AVG}$ of the working fluid between the overall inlet and outlet of the one or more heat-source heat exchangers is 1220.8 J/kg-C. The density $\rho_{Inlet}$ of the working fluid flowing along the thermal transport bus at the overall inlet of the one or more heat-source heat exchangers is 134.82 kg/m$^3$. The pressure drop $\Delta P$ across the thermal transport bus is 2.5 bar (250,000 Pa). The overall effectiveness $\varepsilon_{HSHX}$ of the one or more heat-source heat exchangers is 0.3. Accordingly, for the first example, the thermal transport bus capacity $TTBC$ is 0.67.

EXAMPLE 2: In a second example, a turbofan engine has a fan and a core turbine engine. The turbofan engine also includes a thermal management system. The thermal management system includes a closed-cycle loop thermal transport bus along which a working fluid is moveable. The working fluid is supercritical carbon dioxide. One or more heat-source heat exchangers are positioned along the thermal transport bus. The one or more heat-source heat exchangers have an overall inlet upstream of any one of the heat-source heat exchangers and an overall outlet downstream of any one of the one or more heat-source heat exchangers. One or more heat-sink heat exchangers are also positioned along the thermal transport bus and are in fluid communication with the one or more heat-source heat exchangers via the thermal transport bus.

The turbofan engine is architecturally arranged so that the fan has a fan diameter $D_{FAN}$ of 2.2 m, the axial length $L_{Eng}$ of the turbofan engine is 3 m, and the bypass ratio $BPR$ of the turbofan engine is 12.5. The thermal transport bus and other components of the thermal management system are arranged and operational so that the overall inlet temperature $T_{Inlet}$ of the working fluid at the overall inlet of the one or more heat-source heat exchangers is 50°C and the overall outlet temperature of the working fluid at the overall inlet of the one or more heat-source heat exchangers is 120°C, thus the temperature difference $\Delta T$ between the working fluid at the overall inlet and the overall outlet of the one or more heat-source heat exchangers is 70°C. The average specific heat capacity $cp_{AVG}$ of the working fluid between the overall inlet and outlet of the one or more heat-source heat exchangers is 2270.35 J/kg-C. The density $\rho_{Inlet}$ of the working fluid flowing along the thermal transport bus at the overall inlet of the one or more heat-source heat exchangers is 262.49 kg/m$^3$. The pressure drop $\Delta P$ across the thermal transport bus is 1.5 bar (150,000 Pa). The overall effectiveness $\varepsilon_{HSHX}$ of the one or more heat-source heat exchangers is 0.7. Accordingly, for the second example, the thermal transport bus capacity $TTBC$ is 3.08.

EXAMPLE 3: In a third example, a turbofan engine has a fan and a core turbine engine. The turbofan engine also includes a thermal management system. The thermal management system includes a closed-cycle loop thermal transport bus along which a working fluid is moveable. The working fluid is supercritical carbon dioxide. One or more heat-source heat exchangers are positioned along the thermal transport bus. The one or more heat-source heat exchangers have an overall inlet upstream of any one of the heat-source heat exchangers and an overall outlet downstream of any one of the one or more heat-source heat exchangers. One or more heat-sink heat exchangers are also positioned along the thermal transport bus and are in fluid communication with the one or more heat-source heat exchangers via the thermal transport bus.

The turbofan engine is architecturally arranged so that the fan has a fan diameter $D_{FAN}$ of 3.5 m, the axial length $L_{Eng}$ of the turbofan engine is 6.5 m, and the bypass ratio $BPR$ of the turbofan engine is 20. The thermal transport bus and other components of the thermal management system are arranged and operational so that the overall inlet temperature $T_{Inlet}$ of the working fluid at the overall inlet of the one or more heat-source heat exchangers is 31°C and the overall outlet temperature of the working fluid at the overall inlet of the one or more heat-source heat exchangers is 200°C, thus the temperature difference $\Delta T$ between the working fluid at the overall inlet and the overall outlet of the one or more heat-source heat exchangers is 169°C. The average specific heat capacity $cp_{AVG}$ of the working fluid between the overall inlet and outlet of the one or more heat-source heat exchangers is 2753.35 J/kg-C. The density $\rho_{Inlet}$ of the working fluid flowing along the thermal transport bus at the overall inlet of the one or more heat-source heat exchangers is 719.06 kg/m$^3$. The pressure drop $\Delta P$ across the thermal transport bus is 0.3 bar (30,000 Pa). The overall effectiveness $\varepsilon_{HSHX}$ of the one or more heat-source heat exchangers is 0.9. Accordingly, for the third example, the thermal transport bus capacity $TTBC$ is 24.56.

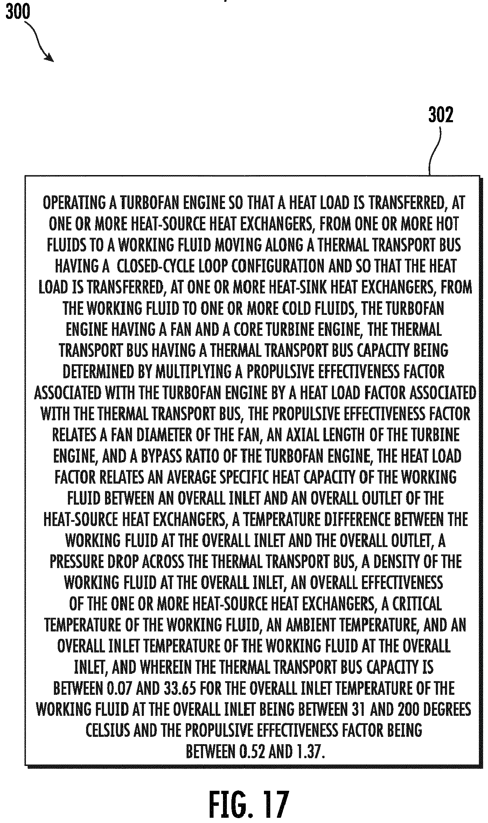

FIG. 17 provides a flow diagram for a method 300 of operating a turbofan engine. The turbofan engine can be mounted to an aircraft, for example.

At 302, the method 300 includes operating a turbofan engine so that a heat load is transferred, at one or more heat-source heat exchangers, from one or more hot fluids to a working fluid moving along a thermal transport bus having a closed-cycle loop configuration and so that the heat load is transferred, at one or more heat-sink heat exchangers, from the working fluid to one or more cold fluids, the turbofan engine having a fan and a core turbine engine, the thermal transport bus having a thermal transport bus capacity being determined by multiplying a propulsive effectiveness factor associated with the turbofan engine by a heat load factor associated with the thermal transport bus, the propulsive effectiveness factor relates a fan diameter of the fan, an axial length of the turbine engine, and a bypass ratio of the turbofan engine, the heat load factor relates an average specific heat capacity of the working fluid between an overall inlet and an overall outlet of the heat-source heat exchangers, a temperature difference between the working fluid at the overall inlet and the overall outlet, a pressure drop across the thermal transport bus, a density of the working fluid at the overall inlet, an overall effectiveness of the one or more heat-source heat exchangers, a critical temperature of the working fluid, an ambient temperature, and an overall inlet temperature of the working fluid at the overall inlet, and wherein the thermal transport bus capacity is between 0.07 and 33.65 for the overall inlet temperature of the working fluid at the overall inlet being between 31 and 200 degrees Celsius and the propulsive effectiveness factor being between 0.52 and 1.37. The thermal transport bus capacity according to such implementations is graphically represented in FIG. 7.

In some implementations, the propulsive effectiveness factor is defined as a product determined by multiplying a quotient by the bypass ratio raised to a one-quarter power, the quotient being determined by dividing the fan diameter by the axial length of the turbofan engine. The axial length of the turbofan engine is a distance between a flange of fan casing of the turbofan engine and an aft flange of a turbine rear frame of the turbofan engine.

In some implementations, the heat load factor is defined as a first product raised to a power. The first product is determined by multiplying a first quotient by the overall effectiveness of the one or more heat-source heat exchangers. The first quotient is determined by dividing a second product by a second quotient. The second product is determined by multiplying the average specific heat capacity of the working fluid between the overall inlet and the overall outlet by the temperature difference between the working fluid at the overall inlet and the overall outlet. The second quotient is determined by dividing the pressure drop across the thermal transport bus by the density of the working fluid at the overall inlet. The power to which the first product is raised is determined by multiplying one-third by a third quotient. The third quotient is determined by dividing a first difference by a second difference. The first difference is determined by subtracting the ambient temperature from the critical temperature of the working fluid. The second difference is determined by subtracting the ambient temperature by the overall inlet temperature of the working fluid at the overall inlet.

In some implementations, the overall effectiveness of the one or more heat-source exchangers is determined based at least in part on an effectiveness of each one of the one or more heat-source heat exchangers. The effectiveness of a given one of the one or more heat-source heat exchangers is defined as a quotient determined by dividing a first product by a second product. The first product is determined by multiplying a mass flowrate of the working fluid through the given heat-source heat exchanger by a specific heat capacity of the working fluid at the given heat-source heat exchanger by a difference in temperature of the working fluid at a working fluid inlet and a working fluid outlet of the given heat-source heat exchanger. The second product is determined by multiplying a difference in temperature of a hot fluid at the hot fluid inlet and the working fluid at a working fluid inlet of the given heat-source heat exchanger by a minimum one of: i) a mass flowrate of the hot fluid through the given heat-source exchanger multiplied by a specific heat capacity of the hot fluid at the given heat-source heat exchanger; and ii) the mass flowrate of the working fluid through the given heat-source heat exchanger multiplied by the specific heat capacity of the working fluid at the given heat-source heat exchanger.

In some implementations, the one or more heat-source heat exchangers include only a single heat-source heat exchanger. In such implementations, the effectiveness of the single heat-source heat exchanger is defined as a quotient determined by dividing a first product by a second product. The first product is determined by multiplying a mass flowrate of the working fluid through the single heat-source heat exchanger by a specific heat capacity of the working fluid at the single heat-source heat exchanger by a difference in temperature of the working fluid at a working fluid inlet and a working fluid outlet of the single heat-source heat exchanger. The second product is determined by multiplying a difference in temperature of a hot fluid at the hot fluid inlet and the working fluid at a working fluid inlet of the single heat-source heat exchanger by a minimum one of: i) a mass flowrate of the hot fluid through the single heat-source exchanger multiplied by a specific heat capacity of the hot fluid at the single heat-source heat exchanger; and ii) the mass flowrate of the working fluid through the single heat-source heat exchanger multiplied by the specific heat capacity of the working fluid at the single heat-source heat exchanger.

In some further implementations, the one or more heat-source heat exchangers include at least two heat-source heat exchangers. The at least two heat-source heat exchangers are series-arranged heat-source heat exchangers. In such implementations, the overall effectiveness of the series-arranged heat-source heat exchangers is defined as a quotient determined by dividing a first sequence sum by a sum, wherein the sum is determined by adding a second sequence sum and a difference in temperature of a hot fluid at a hot fluid inlet of a last heat-source heat exchanger of the series-arranged heat-source heat exchangers and the working fluid at a working fluid inlet of the last heat-source heat exchanger. The first sequence sum is determined by summing a first sequence of first expressions. A given first expression of the first expressions is defined as a product determined by multiplying the effectiveness of the given heat-source heat exchanger of the one or more heat-source heat exchangers by a difference in temperature of a hot fluid at a hot fluid inlet and the working fluid at a working fluid inlet of the given heat-source heat exchanger. The number of first expressions in the first sequence is equal to a number of heat-source heat exchangers of the one or more heat-source heat exchangers. The second sequence sum is determined by summing a second sequence of second expressions. A given second expression of the second expressions is defined as a product determined by multiplying the effectiveness of the given heat-source heat exchanger by the difference in temperature of the hot fluid at the hot fluid inlet and the working fluid at a working fluid inlet of the given heat-source heat exchanger. The number of second expressions in the second sequence is equal to the number of series-arranged heat-source heat exchangers.

In yet other implementations, the heat-source heat exchangers include at least two heat-source heat exchangers. The at least two heat-source heat exchangers are parallel-arranged heat-source heat exchangers. In such implementations, the overall effectiveness of the parallel-arranged heat-source heat exchangers is defined as a quotient determined by dividing a first sequence sum by a second sequence sum. The first sequence sum is determined by summing a first sequence of first expressions. A given first expression of the first expressions is defined as a product determined by multiplying the effectiveness of the given heat-source heat exchanger by a difference in temperature of a hot fluid at a hot fluid inlet and the working fluid at a working fluid inlet of the given heat-source heat exchanger by the mass flowrate of the working fluid through the given heat-source heat exchanger. The number of first expressions in the first sequence is equal to a number of the parallel-arranged heat-source heat exchangers. The second sequence sum is determined by summing a second sequence of second expressions. A given second expression of the second expressions is defined as a product being determined by multiplying the difference in temperature of the hot fluid at the hot fluid inlet and the working fluid at the working fluid inlet of the given heat-source heat exchanger by the mass flowrate of the working fluid through the given heat-source heat exchanger. The number of second expressions in the second sequence is equal to the number of parallel-arranged heat-source heat.

In some other implementations, the heat-source heat exchangers include parallel-arranged heat-source heat exchangers and at least one heat-source heat exchanger arranged in series with the parallel-arranged heat-source heat exchangers.

For instance, the embodiment of FIG. 5 includes parallel-arranged heat-source heat exchangers and series-arranged heat-source heat exchangers. In such implementations, such as for the embodiment of FIG. 5, the overall effectiveness of the heat-source heat exchangers can be determined by: i) determining a first resulting effectiveness associated with the parallel-arranged heat-source heat exchangers, wherein the first resulting effectiveness of the parallel-arranged heat exchangers is treated as a pseudo heat-source heat exchanger in series arrangement with the series-arranged heat-source heat exchangers; and ii) determining the overall effectiveness for the series-arranged heat-source heat exchangers and the pseudo heat-source heat exchanger, e.g., using (4) of FIG. 7, with the difference in temperature between the hot fluid inlet and working fluid inlet for the pseudo heat-source heat exchanger being determined by taking the temperature difference between the average value of the hot fluid inlets and the average value of the working fluid inlets in the parallel-arranged heat-source heat exchangers.

In other implementations, as another example, first and second heat-source heat exchangers can be arranged in series with one another along a first line that connects at an inlet junction and at an outlet junction with a second line. Working fluid flows along the first and second lines. A third heat-source heat exchanger is positioned along the second line such that the third heat-source heat exchanger is in parallel with the series-arranged first and second heat-source heat exchangers. In such implementations, the overall effectiveness of the heat-source heat exchangers can be determined by: i) determining a first resulting effectiveness associated with the series-arranged first and second heat-source heat exchangers positioned along the first line, wherein the first resulting effectiveness of the series-arranged heat exchangers is treated as a pseudo heat-source heat exchanger in parallel arrangement with the third heat-source heat exchanger positioned along the second line; and ii) determining the overall effectiveness for the parallel-arranged, third heat-source heat exchanger and pseudo heat-source heat exchanger, e.g., using (5) of FIG. 7.

Accordingly, for implementations in which there is a combination of series and parallel-arranged heat-source heat exchangers, the overall effectiveness of the heat-source heat exchangers can be determined by: i) determining a resulting effectiveness associated with parallel-arranged or series-arranged heat exchangers, wherein the resulting effectiveness of the series-arranged or parallel-arranged heat exchangers is treated as an effectiveness of a pseudo heat-source heat exchanger in parallel or series arrangement with one or more other heat-source heat exchangers; and ii) determining the overall effectiveness for the pseudo heat-source heat exchanger and the one or more other heat-source heat exchangers.

In some implementations, the thermal transport bus capacity $TTBC$ is between 0.07 and 33.65 for the overall inlet temperature $T_{Inlet}$ of the working fluid WF at the overall inlet 222 being between 31 and 200 degrees Celsius and the propulsive effectiveness factor $PEF$ being between 1.08 and 1.37. The thermal transport bus capacity according to such implementations is graphically represented in FIG. 8.

In some other implementations, the thermal transport bus capacity $TTBC$ is between 0.07 and 26.48 for the overall inlet temperature $T_{Inlet}$ of the working fluid WF at the overall inlet 222 being between 31 and 200 degrees Celsius and the propulsive effectiveness factor $PEF$ being between 0.52 and 1.08. The thermal transport bus capacity according to such implementations is graphically represented in FIG. 9.

In some further implementations, the thermal transport bus capacity $TTBC$ is between 3.34 and 33.65 for the overall inlet temperature $T_{Inlet}$ of the working fluid WF at the overall inlet 222 being between 31 and 90 degrees Celsius and the propulsive effectiveness factor $PEF$ being between 1.08 and 1.37. The thermal transport bus capacity according to such implementations is graphically represented in FIG. 10.

In yet other implementations, the thermal transport bus capacity $TTBC$ is between 0.07 and 4.24 for the overall inlet temperature $T_{Inlet}$ of the working fluid WF at the overall inlet 222 being between 90 and 200 degrees Celsius and the propulsive effectiveness factor $PEF$ being between 1.08 and 1.37. The thermal transport bus capacity according to such implementations is graphically represented in FIG. 11.

In some further implementations, the thermal transport bus capacity $TTBC$ is between 0.96 and 26.48 for the overall inlet temperature $T_{Inlet}$ of the working fluid WF at the overall inlet 222 being between 31 and 90 degrees Celsius and the propulsive effectiveness factor $PEF$ being between 0.52 and 1.08. The thermal transport bus capacity according to such implementations is graphically represented in FIG. 12.

In some other implementations, the thermal transport bus capacity $TTBC$ is between 0.07 and 3.34 for the overall inlet temperature $T_{Inlet}$ of the working fluid WF at the overall inlet 222 being between 90 and 200 degrees Celsius and the propulsive effectiveness factor $PEF$ being between 0.52 and 1.08. The thermal transport bus capacity according to such implementations is graphically represented in FIG. 13.

In yet other implementations, the thermal transport bus capacity *TTBC* is between 0.51 and 4.24 for the overall inlet temperature $T_{Inlet}$ of the working fluid WF at the overall inlet 222 being between 90 and 130 degrees Celsius and the propulsive effectiveness factor *PEF* being between 0.52 and 1.37. The thermal transport bus capacity according to such implementations is graphically represented in FIG. 14.

In some implementations, the working fluid is supercritical carbon dioxide.

In some implementations, the thermal transport bus has a closed-cycle loop configuration.

In some implementations, the bypass ratio of the turbofan engine is between 3 and 20.

In some implementations, the bypass ratio of the turbofan engine is between 3 and 12.5.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:

A turbofan engine, comprising: a core turbine engine; a fan positioned upstream of the core turbine engine; and a thermal management system having a thermal transport bus along which a working fluid is movable, one or more heat-source heat exchangers, and one or more heat-sink heat exchangers arranged in fluid communication with the one or more heat-source heat exchangers via the thermal transport bus, the thermal transport bus having a thermal transport bus capacity being determined by multiplying a propulsive effectiveness factor associated with the turbofan engine by a heat load factor associated with the thermal transport bus, the propulsive effectiveness factor relates a fan diameter of the fan, an axial length of the turbofan engine, and a bypass ratio of the turbofan engine, the heat load factor relates an average specific heat capacity of the working fluid between an overall inlet and an overall outlet of the heat-source heat exchangers, a temperature difference between the working fluid at the overall inlet and the overall outlet, a pressure drop across the thermal transport bus, a density of the working fluid at the overall inlet, an overall effectiveness of the one or more heat-source heat exchangers, a critical temperature of the working fluid, an ambient temperature, and an overall inlet temperature of the working fluid at the overall inlet, and wherein the thermal transport bus capacity is between 0.07 and 33.65 for the overall inlet temperature of the working fluid at the overall inlet being between 31 and 200 degrees Celsius and the propulsive effectiveness factor being between 0.52 and 1.37.

The turbofan engine of any preceding clause, wherein the propulsive effectiveness factor is defined as a product determined by multiplying a quotient by the bypass ratio raised to a one-quarter power, the quotient being determined by dividing the fan diameter by the axial length of the turbofan engine, and wherein the axial length of the turbofan engine is a distance between a flange of a fan casing of the turbofan engine and an aft flange of a turbine rear frame of the turbofan engine.

The turbofan engine of any preceding clause, wherein the heat load factor is defined as a first product raised to a power, the first product being determined by multiplying a first quotient by the overall effectiveness of the one or more heat-source heat exchangers, the first quotient being determined by dividing a second product by a second quotient, the second product being determined by multiplying the average specific heat capacity of the working fluid between the overall inlet and the overall outlet by the temperature difference between the working fluid at the overall inlet and the overall outlet, the second quotient being determined by dividing the pressure drop across the thermal transport bus by the density of the working fluid at the overall inlet, and the power being determined by multiplying one-third by a third quotient, the third quotient being determined by dividing a first difference by a second difference, the first difference being determined by subtracting the ambient temperature from the critical temperature of the working fluid, the second difference being determined by subtracting the ambient temperature by the overall inlet temperature of the working fluid at the overall inlet.

The turbofan engine of any preceding clause, wherein the overall effectiveness of the one or more heat-source heat exchangers is determined based at least in part on an effectiveness of each one of the one or more heat-source heat exchangers, the effectiveness of a given heat-source heat exchanger of the one or more heat-source heat exchangers is defined as a quotient determined by dividing a first product by a second product, the first product being determined by multiplying a mass flowrate of the working fluid through the given heat-source heat exchanger by a specific heat capacity of the working fluid at the given heat-source heat exchanger by a difference in temperature of the working fluid at a working fluid inlet and a working fluid outlet of the given heat-source heat exchanger, the second product being determined by multiplying a difference in temperature of a hot fluid at a hot fluid inlet and the working fluid at the working fluid inlet of the given heat-source heat exchanger by a minimum one of: i) a mass flowrate of the hot fluid through the given heat-source heat exchanger multiplied by a specific heat capacity of the hot fluid at the given heat-source heat exchanger; and ii) the mass flowrate of the working fluid through the given heat-source heat exchanger multiplied by the specific heat capacity of the working fluid at the given heat-source heat exchanger.

The turbofan engine of any preceding clause, wherein the one or more heat-source heat exchangers include at least two heat-source heat exchangers, the at least two heat-source heat exchangers being series-arranged heat-source heat exchangers, wherein the overall effectiveness of the series-arranged heat-source heat exchangers is defined as a quotient determined by dividing a first sequence sum by a sum, wherein the sum is determined by adding a second sequence sum and a difference in temperature of a hot fluid at a hot fluid inlet of a last heat-source heat exchanger of the series-arranged heat-source heat exchangers and the working fluid at the working fluid inlet of the last heat-source heat exchanger, the first sequence sum is determined by summing a first sequence of first expressions, a given first expression of the first sequence of first expressions being defined as a product determined by multiplying the effectiveness of the given heat-source heat exchanger by a difference in temperature of a hot fluid at a hot fluid inlet and the working fluid at a working fluid inlet of the given heat-source heat exchanger, wherein a number of first expressions in the first sequence is equal to a number of heat-source heat exchangers of the series-arranged heat-source heat exchangers, and the second sequence sum is determined by summing a second sequence of second expressions, a given second expression of the second sequence of second expressions being defined as a product being determined by multiplying the effectiveness of the given heat-source heat exchanger by the difference in temperature of the hot fluid at the hot fluid inlet and the working fluid at the working fluid inlet of the given heat-source heat exchanger, wherein a number of second expressions in the second sequence is equal to the number of heat-source heat exchangers of the series-arranged heat-source heat exchangers.

The turbofan engine of any preceding clause, wherein the one or more heat-source heat exchangers include at least two heat-source heat exchangers, the at least two heat-source heat exchangers being parallel-arranged heat-source heat exchangers, wherein the overall effectiveness of the parallel-arranged heat-source heat exchangers is defined as a quotient determined by dividing a first sequence sum by a second sequence sum, the first sequence sum is determined by summing a first sequence of first expressions, a given first expression of the first sequence of first expressions being defined as a product determined by multiplying the effectiveness of the given heat-source heat exchanger by a difference in temperature of a hot fluid at a hot fluid inlet and the working fluid at the working fluid inlet of the given heat-source heat exchanger by the mass flowrate of the working fluid through the given heat-source heat exchanger, wherein a number of first expressions in the first sequence is equal to a number of heat-source heat exchangers of the parallel-arranged heat-source heat exchangers, and the second sequence sum is determined by summing a second sequence of second expressions, a given second expression of the second sequence of second expressions being defined as a product being determined by multiplying the difference in temperature of the hot fluid at the hot fluid inlet and the working fluid at the working fluid inlet of the given heat-source heat exchanger by the mass flowrate of the working fluid through the given heat-source heat exchanger, wherein a number of second expressions in the second sequence is equal to the number of heat-source heat exchangers of the parallel-arranged heat-source heat exchangers.

The turbofan engine of any preceding clause, wherein the one or more heat-source heat exchangers include at least three heat-source heat exchangers, and wherein the overall effectiveness of the at least three heat-source heat exchangers is determined by: i) determining a resulting effectiveness between parallel-arranged heat-source heat exchangers of the at least three heat-source heat exchangers, wherein the resulting effectiveness is treated as an effectiveness of a pseudo heat-source heat exchanger arranged in series with one or more series-arranged heat-source heat exchangers of the at least three heat-source heat exchangers; and ii) determining the overall effectiveness of the one or more series-arranged heat-source heat exchangers and the pseudo heat-source heat exchanger based at least in part on the effectiveness of the pseudo heat-source heat exchanger, with the difference in temperature between a hot fluid inlet and a working fluid inlet of the pseudo heat-source heat exchanger being determined by taking a temperature difference between an average value of hot fluid at hot fluid inlets of respective ones of the parallel-arranged heat-source heat exchangers and an average value of the working fluid at working fluid inlets of respective ones of the parallel-arranged heat-source heat exchangers.

The turbofan engine of any preceding clause, wherein the one or more heat-source heat exchangers include a single heat-source heat exchanger, and wherein the overall effectiveness is the effectiveness of the single heat-source heat exchanger.

The turbofan engine of any preceding clause, wherein the thermal transport bus capacity is between 0.07 and 33.65 for the overall inlet temperature of the working fluid at the overall inlet being between 31 and 200 degrees Celsius and the propulsive effectiveness factor being between 1.08 and 1.37.

The turbofan engine of any preceding clause, wherein the thermal transport bus capacity is between 0.07 and 26.48 for the overall inlet temperature of the working fluid at the overall inlet being between 31 and 200 degrees Celsius and the propulsive effectiveness factor being between 0.52 and 1.08.

The turbofan engine of any preceding clause, wherein the thermal transport bus capacity is between 3.34 and 33.65 for the overall inlet temperature of the working fluid at the overall inlet being between 31 and 90 degrees Celsius and the propulsive effectiveness factor being between 1.08 and 1.37.

The turbofan engine of any preceding clause, wherein the thermal transport bus capacity is between 0.07 and 4.24 for the overall inlet temperature of the working fluid at the overall inlet being between 90 and 200 degrees Celsius and the propulsive effectiveness factor being between 1.08 and 1.37.

The turbofan engine of any preceding clause, wherein the thermal transport bus capacity is between 0.96 and 26.48 for the overall inlet temperature of the working fluid at the overall inlet being between 31 and 90 degrees Celsius and the propulsive effectiveness factor being between 0.52 and 1.08.

The turbofan engine of any preceding clause, wherein the thermal transport bus capacity is between 0.07 and 3.34 for the overall inlet temperature of the working fluid at the overall inlet being between 90 and 200 degrees Celsius and the propulsive effectiveness factor being between 0.52 and 1.08.

The turbofan engine of any preceding clause, wherein the thermal transport bus capacity is between 0.51 and 4.24 for the overall inlet temperature of the working fluid at the overall inlet being between 90 and 130 degrees Celsius and the propulsive effectiveness factor being between 0.52 and 1.37.

The turbofan engine of any preceding clause, wherein the working fluid is supercritical carbon dioxide.

The turbofan engine of any preceding clause, wherein the thermal transport bus has a closed-cycle loop configuration.

The turbofan engine of any preceding clause, wherein the bypass ratio is between 3 and 20.

A method, comprising: operating a turbofan engine so that a heat load is transferred, at one or more heat-source heat exchangers, from one or more hot fluids to a working fluid moving along a thermal transport bus having a closed-cycle loop configuration and so that the heat load is transferred, at one or more heat-sink heat exchangers, from the working fluid to one or more cold fluids, the turbofan engine having a fan and a core turbine engine, the thermal transport bus having a thermal transport bus capacity being determined by multiplying a propulsive effectiveness factor associated with the turbofan engine by a heat load factor associated with the thermal transport bus, the propulsive effectiveness factor relates a fan diameter of the fan, an axial length of the turbofan engine, and a bypass ratio of the turbofan engine, the heat load factor relates an average specific heat capacity of the working fluid between an overall inlet and an overall outlet of the heat-source heat exchangers, a temperature difference between the working fluid at the overall inlet and the overall outlet, a pressure drop across the thermal transport bus, a density of the working fluid at the overall inlet, an overall effectiveness of the one or more heat-source heat exchangers, a critical temperature of the working fluid, an ambient temperature, and an overall inlet temperature of the working fluid at the overall inlet, and wherein the thermal transport bus capacity is between 0.07 and 33.65 for the overall inlet temperature of the working fluid at the overall inlet being between 31 and 200 degrees Celsius and the propulsive effectiveness factor being between 0.52 and 1.37.

A thermal management system for a turbofan engine, the thermal management system comprising: a thermal transport bus along which a working fluid is movable; one or more heat-source heat exchangers; and one or more heat-sink heat exchangers arranged in fluid communication with the one or more heat-source heat exchangers via the thermal transport bus, the thermal transport bus having a thermal transport bus capacity being determined by multiplying a propulsive effectiveness factor associated with the turbofan engine by a heat load factor associated with the thermal transport bus, the propulsive effectiveness factor relates a fan diameter of a fan of the turbofan engine, an axial length of the turbofan engine, and a bypass ratio of the turbofan engine, the heat load factor relates an average specific heat capacity of the working fluid between an overall inlet and an overall outlet of the heat-source heat exchangers, a temperature difference between the working fluid at the overall inlet and the overall outlet, a pressure drop across the thermal transport bus, a density of the working fluid at the overall inlet, an overall effectiveness of the one or more heat-source heat exchangers, a critical temperature of the working fluid, an ambient temperature, and an overall inlet temperature of the working fluid at the overall inlet, and wherein the thermal transport bus capacity is between 0.07 and 33.65 for the overall inlet temperature of the working fluid at the overall inlet being between 31 and 200 degrees Celsius and the propulsive effectiveness factor being between 0.52 and 1.37.

A turbofan engine, comprising: a core turbine engine; a fan positioned upstream of the core turbine engine; and a thermal management system having a thermal transport bus along which a working fluid is movable, one or more heat-source heat exchangers, and one or more heat-sink heat exchangers arranged in fluid communication with the one or more heat-source heat exchangers via the thermal transport bus, the thermal transport bus having a thermal transport bus capacity being defined by: $TTBC = PEF * HLF$, wherein $TTBC$ is the thermal transport bus capacity, $PEF$ is a propulsive effectiveness factor associated with the turbofan engine, and $HLF$ is a heat load factor associated with the thermal transport bus, and wherein the thermal transport bus capacity is between 0.07 and 33.65 for the overall inlet temperature of the working fluid at the overall inlet being between 31 and 200 degrees Celsius and the propulsive effectiveness factor being between 0.52 and 1.37.

The turbofan engine of any preceding clause, wherein the propulsive effectiveness factor is defined by:

$$PEF = \frac{D_{Fan}}{L_{Eng}} * BPR^{1/4}$$

, wherein $PEF$ is the propulsive effectiveness factor associated with the turbofan engine, $D_{Fan}$ is a fan diameter of the fan, $L_{Eng}$ is an axial length of the turbofan engine, and $BPR$ is a bypass ratio of the turbofan engine.

The turbofan engine of any preceding clause, wherein the heat load factor is defined by:

$$HLF = \left( \frac{cp_{Avg} * \Delta T}{\frac{\Delta P}{\rho_{Inlet}}} * \varepsilon_{HSHX} \right)^{\frac{1}{3}\left( \frac{T_{Crit} - T_{Amb}}{T_{Inlet} - T_{Amb}} \right)}$$

, wherein $HLF$ is the heat load factor associated with the thermal transport bus, $cp_{Avg}$ is an average specific heat capacity of the working fluid between an overall inlet and an overall outlet of the heat-source heat exchangers, $\Delta T$ is a temperature difference between the working fluid at the overall inlet and the overall outlet, $\Delta P$ is a pressure drop across the thermal transport bus, $\rho_{Inlet}$ is a density of the working fluid at the overall inlet, $\varepsilon_{HSHX}$ is an overall effectiveness of the one or more heat-source heat exchangers, $T_{Crit}$ is a critical temperature of the working fluid, $T_{Amb}$ is an ambient temperature, and $T_{Inlet}$ is an overall inlet temperature of the working fluid at the overall inlet.

The turbofan engine of any preceding clause, wherein the overall effectiveness of the one or more heat-source heat exchangers is determined based at least in part on an effectiveness of each one of the one or more heat-source heat exchangers, the effectiveness of a given heat-source heat exchanger of the one or more heat-source heat ex-

$$\varepsilon_i = \frac{\dot{m}_{ti} cp_{ti} \beta_i}{min(\dot{m}_{Ti} cp_{Ti}, \dot{m}_{ti} cp_{ti}) \theta_i}$$

changers is defined by: , wherein $\varepsilon_i$ is the effectiveness of a given heat-source heat exchanger of the one or more heat-source heat exchangers, $\dot{m}_{ti}$ is a mass flowrate of the working fluid through the given heat-source heat exchanger, $cp_{ti}$ is a specific heat capacity of the working fluid at the given heat-source heat exchanger, $\beta_i$ is a difference in temperature of the working fluid at a working fluid inlet and a working fluid outlet of the given heat-source heat exchanger, $\theta_i$ is a difference in temperature of a hot fluid at a hot fluid inlet and the working fluid at the working fluid inlet of the given heat-source heat exchanger, $\dot{m}_{Ti}$ is a mass flowrate of the hot fluid through the given heat-source heat exchanger, $cp_{Ti}$ is a specific heat capacity of the hot fluid at the given heat-source heat exchanger, $\dot{m}_{ti}$ is a mass flowrate of the working fluid through the given heat-source heat exchanger, $cp_{ti}$ is a specific heat capacity of the working fluid at the given heat-source heat exchanger, and wherein $min$ represents that a minimum one of: i) a product determined by multiplying the mass flowrate of the hot fluid through the given heat-source heat exchanger and the specific heat capacity of the hot fluid at the given heat-source heat exchanger, and ii) a product determined by multiplying the mass flowrate of the working fluid through the given heat-source heat exchanger and the specific heat capacity of the working fluid at the given heat-source heat exchanger, is multiplied by the difference in temperature of the hot fluid at the hot fluid inlet and the working fluid at the working fluid inlet of the given heat-source heat exchanger.

The turbofan engine of any preceding clause, wherein the one or more heat-source heat exchangers include at least two heat-source heat exchangers, the at least two heat-source heat exchangers being series-arranged heat-source heat exchangers, wherein the overall effectiveness of the series-arranged heat-source heat exchangers is defined

by: $$\varepsilon_{HSHX} = \frac{\sum_i^n \varepsilon_i \theta_i}{\left( \sum_i^n \varepsilon_i \theta_i \right) + \theta_n}$$ , wherein $\varepsilon_{HSHX}$ is the overall effectiveness of the series-arranged heat-source heat ex-

changers, $\sum_i^n \varepsilon_i \theta_i$ is a first sequence sum wherein $\varepsilon_i$ is the effectiveness of a given heat-source heat exchanger of the at least two heat-source heat exchangers arranged in series, $\theta_i$ is the difference in temperature of a hot fluid at a hot fluid inlet of the given heat-source heat exchanger and the working fluid at a working fluid inlet of the given heat-source heat exchanger, $n$ is the number of heat-source heat exchangers of the at least two heat-source heat exchangers arranged in series, and $i$ is an index value starting at one and ending at $n$, and $\left( \sum_i^n \varepsilon_i \theta_i \right)$ is a second sequence sum and $\theta_n$ is a difference in temperature of a hot fluid at a hot fluid inlet of a last heat-source heat exchanger of the series-arranged heat-source heat exchangers and the working fluid at the working fluid inlet of the last heat-source heat exchanger.

The turbofan engine of any preceding clause, wherein the one or more heat-source heat exchangers include at least two heat-source heat exchangers, the at least two heat-source heat exchangers being parallel-arranged heat-source heat exchangers, wherein the overall effectiveness of the parallel-arranged heat-source heat exchangers is

defined by: $\varepsilon_{HSHX} = \frac{\sum_i^n \varepsilon_i \theta_i \dot{m}_{ti}}{\sum_i^n \theta_i \dot{m}_{ti}}$, wherein $\varepsilon_{HSHX}$ is the overall effectiveness of the parallel-arranged heat-source heat exchangers, $\sum_i^n \varepsilon_i \theta_i \dot{m}_{ti}$ is a first sequence sum wherein $\varepsilon_i$ the effectiveness of a given heat-source heat exchanger of the at least two heat-source heat exchangers arranged in parallel, $\theta_i$ is the difference in temperature of a hot fluid at a hot fluid inlet of the given heat-source heat exchanger and the working fluid at a working fluid inlet of the given heat-source heat exchanger, $\dot{m}_{ti}$ is a mass flowrate of the working fluid through the given heat-source heat exchanger, $n$ is the number of heat-source heat exchangers of the at least two heat-source heat exchangers arranged in parallel, and $i$ is an index value starting at one and ending at $n$, and $\sum_i^n \theta_i \dot{m}_{ti}$ is a second sequence sum.

The turbofan engine of any preceding clause, wherein the one or more heat-source heat exchangers include at least three heat-source heat exchangers, and wherein the overall effectiveness of the at least three heat-source heat exchangers is determined by: i) determining a resulting effectiveness between parallel-arranged heat-source heat exchangers of the at least three heat-source heat exchangers according to: $\varepsilon_{HSHX} = \frac{\sum_i^n \varepsilon_i \theta_i \dot{m}_{ti}}{\sum_i^n \theta_i \dot{m}_{ti}}$, wherein the resulting effectiveness is treated as an effectiveness of a pseudo heat-source heat exchanger arranged in series with one or more series-arranged heat-source heat exchangers of the at least three heat-source heat exchangers; and ii) determining the overall effectiveness of the one or more series-arranged heat-source heat exchangers and the pseudo heat-source heat

exchanger according to: $\varepsilon_{HSHX} = \frac{\sum_i^n \varepsilon_i \theta_i}{\left(\sum_i^n \varepsilon_i \theta_i\right) + \theta_n}$, wherein the difference in temperature between a hot fluid inlet and a working fluid inlet of the pseudo heat-source heat exchanger being determined by taking a temperature difference between an average value of hot fluid at hot fluid inlets of respective ones of the parallel-arranged heat-source heat exchangers and an average value of the working fluid at working fluid inlets of respective ones of the parallel-arranged heat-source heat exchangers.

The turbofan engine of any preceding clause, wherein the one or more heat-source heat exchangers include a single heat-source heat exchanger, and wherein the overall effectiveness of the single heat-source heat exchanger is determined according to: $\varepsilon_i = \frac{\dot{m}_{ti} c p_{ti} \beta_i}{min(\dot{m}_{Ti} c p_{Ti}, \dot{m}_{ti} c p_{ti}) \theta_i}$

A method, comprising: operating a turbofan engine so that a heat load is transferred, at one or more heat-source heat exchangers, from one or more hot fluids to a working fluid moving along a thermal transport bus having a closed-cycle loop configuration and so that the heat load is transferred, at one or more heat-sink heat exchangers, from the working fluid to one or more cold fluids, the turbofan engine having a fan and a core turbine engine, the thermal transport bus having a thermal transport bus capacity being defined by: $TTBC = PEF * HLF$, wherein $TTBC$ is the thermal transport bus capacity, $PEF$ is a propulsive effectiveness factor associated with the turbofan engine, and $HLF$ is a heat load factor associated with the thermal transport bus, and wherein the thermal transport bus capacity is between 0.07 and 33.65 for the overall inlet temperature of the working fluid at the overall inlet being between 31 and 200 degrees Celsius and the propulsive effectiveness factor being between 0.52 and 1.37.

The method of any preceding clause, wherein the propulsive effectiveness factor is defined by:

$PEF = \frac{D_{Fan}}{L_{Eng}} * BPR^{1/4}$, wherein $PEF$ is the propulsive effectiveness factor associated with the turbofan engine,

$D_{Fan}$ is a fan diameter of the fan, $L_{Eng}$ is an axial length of the turbofan engine, and $BPR$ is a bypass ratio of the turbofan engine.

The method of any preceding clause, wherein the heat load factor is defined by:

$$HLF = \left( \frac{cp_{Avg}*\Delta T}{\frac{\Delta P}{\rho_{Inlet}}} * \varepsilon_{HSHX} \right)^{\frac{1}{3}\left( \frac{T_{Crit}-T_{Amb}}{T_{Inlet}-T_{Amb}} \right)}$$

, wherein $HLF$ is the heat load factor associated with the thermal transport bus, $cp_{Avg}$ is an average specific heat capacity of the working fluid between an overall inlet and an overall outlet of the heat-source heat exchangers, $\Delta T$ is a temperature difference between the working fluid at the overall inlet and the overall outlet, $\Delta P$ is a pressure drop across the thermal transport bus, $\rho_{Inlet}$ is a density of the working fluid at the overall inlet, $\varepsilon_{HSHX}$ is an overall effectiveness of the one or more heat-source heat exchangers, $T_{Crit}$ is a critical temperature of the working fluid, $T_{Amb}$ is an ambient temperature, and $T_{Inlet}$ is an overall inlet temperature of the working fluid at the overall inlet.

The method of any preceding clause, wherein the overall effectiveness of the one or more heat-source heat exchangers is determined based at least in part on an effectiveness of each one of the one or more heat-source heat exchangers, the effectiveness of a given heat-source heat exchanger of the one or more heat-source heat exchangers

is defined by: $\varepsilon_i = \frac{\dot{m}_{ti} cp_{ti} \beta_i}{min(\dot{m}_{Ti} cp_{Ti}, \dot{m}_{ti} cp_{ti}) \theta_i}$ , wherein $\varepsilon_i$ is the effectiveness of a given heat-source heat exchanger of the one or more heat-source heat exchangers, $\dot{m}_{ti}$ is a mass flowrate of the working fluid through the given heat-source heat exchanger, $cp_{ti}$ is a specific heat capacity of the working fluid at the given heat-source heat exchanger, $\beta_i$ is a difference in temperature of the working fluid at a working fluid inlet and a working fluid outlet of the given heat-source heat exchanger, $\theta_i$ is a difference in temperature of a hot fluid at a hot fluid inlet and the working fluid at the working fluid inlet of the given heat-source heat exchanger, $\dot{m}_{Ti}$ is a mass flowrate of the hot fluid through the given heat-source heat exchanger, $cp_{Ti}$ is a specific heat capacity of the hot fluid at the given heat-source heat exchanger, $\dot{m}_{ti}$ is a mass flowrate of the working fluid through the given heat-source heat exchanger, $cp_{ti}$ is a specific heat capacity of the working fluid at the given heat-source heat exchanger, and wherein $min$ represents that a minimum one of: i) a product determined by multiplying the mass flowrate of the hot fluid through the given heat-source heat exchanger and the specific heat capacity of the hot fluid at the given heat-source heat exchanger, and ii) a product determined by multiplying the mass flowrate of the working fluid through the given heat-source heat exchanger and the specific heat capacity of the working fluid at the given heat-source heat exchanger, is multiplied by the difference in temperature of the hot fluid at the hot fluid inlet and the working fluid at the working fluid inlet of the given heat-source heat exchanger.

The method of any preceding clause, wherein the one or more heat-source heat exchangers include at least two heat-source heat exchangers, the at least two heat-source heat exchangers being series-arranged heat-source heat exchangers, wherein the overall effectiveness of the series-arranged heat-source heat exchangers is defined by:

$\varepsilon_{HSHX} = \frac{\sum_i^n \varepsilon_i \theta_i}{(\sum_i^n \varepsilon_i \theta_i) + \theta_n}$ , wherein $\varepsilon_{HSHX}$ is the overall effectiveness of the series-arranged heat-source heat exchang-

ers, $\sum_i^n \varepsilon_i \theta_i$ is a first sequence sum wherein $\varepsilon_i$ is the effectiveness of a given heat-source heat exchanger of the at least two heat-source heat exchangers arranged in series, $\theta_i$ is the difference in temperature of a hot fluid at a hot fluid inlet of the given heat-source heat exchanger and the working fluid at a working fluid inlet of the given heat-source heat exchanger, $n$ is the number of heat-source heat exchangers of the at least two heat-source heat exchangers arranged in series, and $i$ is an index value starting at one and ending at $n$, and ($\sum_i^n \varepsilon_i \theta_i$) is a second sequence sum and $\theta_n$ is a difference in temperature of a hot fluid at a hot fluid inlet of a last heat-source heat exchanger of the series-arranged heat-source heat exchangers and the working fluid at the working fluid inlet of the last heat-source heat exchanger.

The method of any preceding clause, wherein the one or more heat-source heat exchangers include at least two heat-source heat exchangers, the at least two heat-source heat exchangers being parallel-arranged heat-source heat exchangers, wherein the overall effectiveness of the parallel-arranged heat-source heat exchangers is defined by:

$\varepsilon_{HSHX} = \frac{\sum_i^n \varepsilon_i \theta_i \dot{m}_{ti}}{\sum_i^n \theta_i \dot{m}_{ti}}$ wherein $\varepsilon_{HSHX}$ is the overall effectiveness of the parallel-arranged heat-source heat exchangers,

$\sum_i^n \varepsilon_i \theta_i \dot{m}_{ti}$ is a first sequence sum wherein $\varepsilon_i$ is the effectiveness of a given heat-source heat exchanger of the at least two heat-source heat exchangers arranged in parallel, $\theta_i$ is the difference in temperature of a hot fluid at a hot fluid inlet of the given heat-source heat exchanger and the working fluid at a working fluid inlet of the given heat-source heat exchanger, $\dot{m}_{ti}$ is a mass flowrate of the working fluid through the given heat-source heat exchanger, $n$ is the number of heat-source heat exchangers of the at least two heat-source heat exchangers arranged in parallel, and i is an index value starting at one and ending at $n$, and $\sum_i^n \theta_i \dot{m}_{ti}$ is a second sequence sum.

The method of any preceding clause, wherein the one or more heat-source heat exchangers include at least three heat-source heat exchangers, and wherein the overall effectiveness of the at least three heat-source heat exchangers is determined by: i) determining a resulting effectiveness between parallel-arranged heat-source heat exchangers of the at least three heat-source heat exchangers according to: $\varepsilon_{HSHX} = \dfrac{\sum_i^n \varepsilon_i \theta_i \dot{m}_{ti}}{\sum_i^n \theta_i \dot{m}_{ti}}$, wherein the resulting effectiveness is treated as an effectiveness of a pseudo heat-source heat exchanger arranged in series with one or more series-arranged heat-source heat exchangers of the at least three heat-source heat exchangers; and ii) determining the overall effectiveness of the one or more series-arranged heat-source heat exchangers and the pseudo heat-source heat exchanger according to: $\varepsilon_{HSHX} = \dfrac{\sum_i^n \varepsilon_i \theta_i}{\left(\sum_i^n \varepsilon_i \theta_i\right) + \theta_n}$, wherein the difference in temperature between a hot fluid inlet and a working fluid inlet of the pseudo heat-source heat exchanger being determined by taking a temperature difference between an average value of hot fluid at hot fluid inlets of respective ones of the parallel-arranged heat-source heat exchangers and an average value of the working fluid at working fluid inlets of respective ones of the parallel-arranged heat-source heat exchangers.

The method of any preceding clause, wherein the one or more heat-source heat exchangers include a single heat-source heat exchanger, and wherein the overall effectiveness of the single heat-source heat exchanger is determined according to: $\varepsilon_i = \dfrac{\dot{m}_{ti} c p_{ti} \beta_i}{min(\dot{m}_{Ti} c p_{Ti}, \dot{m}_{ti} c p_{ti}) \theta_i}$ .

A thermal management system for a turbofan engine, the thermal management system comprising: a thermal transport bus along which a working fluid is movable; one or more heat-source heat exchangers; and one or more heat-sink heat exchangers arranged in fluid communication with the one or more heat-source heat exchangers via the thermal transport bus, the thermal transport bus having a thermal transport bus capacity being defined by: $TTBC = PEF * HLF$, wherein $TTBC$ is the thermal transport bus capacity, $PEF$ is a propulsive effectiveness factor associated with the turbofan engine, and $HLF$ is a heat load factor associated with the thermal transport bus, and wherein the propulsive effectiveness factor is defined by: $PEF = \dfrac{D_{Fan}}{L_{Eng}} * BPR^{1/4}$, wherein $D_{Fan}$ is a fan diameter of the fan, $L_{Eng}$ is an axial length of the turbofan engine, and $BPR$ is a bypass ratio of the turbofan engine, and wherein the heat load factor is defined by:

$$HLF = \left(\frac{cp_{Avg} * \Delta T}{\frac{\Delta P}{\rho_{Inlet}}} * \varepsilon_{HSHX}\right)^{\frac{1}{3}\left(\frac{T_{Crit} - T_{Amb}}{T_{Inlet} - T_{Amb}}\right)}$$

, wherein $cp_{Avg}$ is an average specific heat capacity of the working fluid between an overall inlet and an overall outlet of the heat-source heat exchangers, $\Delta T$ is a temperature difference between the working fluid at the overall inlet and the overall outlet, $\Delta P$ is a pressure drop across the thermal transport bus, $\rho_{Inlet}$ is a density of the working fluid at the overall inlet, $\varepsilon_{HSHX}$ is an overall effectiveness of the one or more heat-source heat exchangers, $T_{Crit}$ is a critical temperature of the working fluid, $T_{Amb}$ is an ambient temperature, and $T_{Inlet}$ is an overall inlet temperature of the working fluid at the overall inlet, and wherein the thermal transport bus capacity is between 0.07 and 33.65 for the overall inlet temperature of the working fluid at the overall inlet being between 31 and 200 degrees Celsius and the propulsive effectiveness factor being between 0.52 and 1.37.

**Claims**

1. A turbofan engine (100), comprising:

    a core turbine engine (106);

a fan (134) positioned upstream of the core turbine engine (106); and

a thermal management system (200) having a thermal transport bus (210) along which a working fluid (WF) is movable, one or more heat-source heat exchangers (220), and one or more heat-sink heat exchangers (240) arranged in fluid communication with the one or more heat-source heat exchangers (220) via the thermal transport bus (210),

the thermal transport bus (210) having a thermal transport bus capacity (TTBC) being determined by multiplying a propulsive effectiveness factor (PEF) associated with the turbofan engine (100) by a heat load factor (HLF) associated with the thermal transport bus (210), the propulsive effectiveness factor (PEF) relates a fan diameter ($D_{FAN}$) of the fan (134), an axial length ($L_{Eng}$) of the turbofan engine (100), and a bypass ratio (BPR) of the turbofan engine (100), the heat load factor (HLF) relates an average specific heat capacity ($cp_{AVG}$) of the working fluid (WF) between an overall inlet (222) and an overall outlet (224) of the heat-source heat exchangers (220), a temperature difference ($\Delta T$) between the working fluid (WF) at the overall inlet (222) and the overall outlet (224), a pressure drop ($\Delta P$) across the thermal transport bus (210), a density ($\rho_{Inlet}$) of the working fluid (WF) at the overall inlet (222), an overall effectiveness ($\varepsilon_{HSHX}$) of the one or more heat-source heat exchangers (220), a critical temperature ($T_{crit}$) of the working fluid (WF), an ambient temperature ($T_{Amb}$), and an overall inlet temperature ($T_{Inlet}$) of the working fluid (WF) at the overall inlet (222), and

wherein the thermal transport bus capacity (TTBC) is between 0.07 and 33.65 for the overall inlet temperature ($T_{Inlet}$) of the working fluid (WF) at the overall inlet (222) being between 31 and 200 degrees Celsius and the propulsive effectiveness factor (PEF) being between 0.52 and 1.37.

2. The turbofan engine (100) of claim 1, wherein the propulsive effectiveness factor (PEF) is defined as a product determined by multiplying a quotient by the bypass ratio (BPR) raised to a one-quarter power, the quotient being determined by dividing the fan diameter ($D_{FAN}$) by the axial length ($L_{Eng}$) of the turbofan engine (100), and wherein the axial length ($L_{Eng}$) of the turbofan engine (100) is a distance between a flange (143) of a fan casing (145) of the turbofan engine (100) and an aft flange (123) of a turbine rear frame (125) of the turbofan engine (100).

3. The turbofan engine (100) of any preceding claim, wherein the heat load factor (HLF) is defined as a first product raised to a power, the first product being determined by multiplying a first quotient by the overall effectiveness ($\varepsilon_{HSHX}$) of the one or more heat-source heat exchangers (220), the first quotient being determined by dividing a second product by a second quotient, the second product being determined by multiplying the average specific heat capacity ($cp_{AVC}$) of the working fluid (WF) between the overall inlet (222) and the overall outlet (224) by the temperature difference between the working fluid (WF) at the overall inlet (222) and the overall outlet (224), the second quotient being determined by dividing the pressure drop ($\Delta P$) across the thermal transport bus (210) by the density ($\rho_{Inlet}$) of the working fluid (WF) at the overall inlet (222), and

the power being determined by multiplying one-third by a third quotient, the third quotient being determined by dividing a first difference by a second difference, the first difference being determined by subtracting the ambient temperature ($T_{Amb}$) from the critical temperature ($T_{Crit}$) of the working fluid (WF), the second difference being determined by subtracting the ambient temperature ($T_{Amb}$) by the overall inlet temperature ($T_{Inlet}$) of the working fluid (WF) at the overall inlet (222).

4. The turbofan engine (100) of any preceding claim, wherein the overall effectiveness ($\varepsilon_{HSHX}$) of the one or more heat-source heat exchangers (220) is determined based at least in part on an effectiveness ($\varepsilon_i$) of each one of the one or more heat-source heat exchangers (220),

the effectiveness ($\varepsilon_i$) of a given heat-source heat exchanger of the one or more heat-source heat exchangers (220) is defined as a quotient determined by dividing a first product by a second product, the first product being determined by multiplying a mass flowrate ($\dot{m}_{ti}$) of the working fluid (WF) through the given heat-source heat exchanger by a specific heat capacity ($cp_{ti}$) of the working fluid (WF) at the given heat-source heat exchanger by a difference in temperature ($\beta_i$) of the working fluid (WF) at a working fluid inlet (230E) and a working fluid outlet (232E) of the given heat-source heat exchanger, the second product being determined by multiplying a difference in temperature ($\theta_i$) of a hot fluid (HF) at a hot fluid inlet (226E) and the working fluid (WF) at the working fluid inlet (230E) of the given heat-source heat exchanger by a minimum (min) one of: i) a mass flowrate ($\dot{m}_{Ti}$) of the hot fluid (HF) through the given heat-source heat exchanger multiplied by a specific heat capacity ($cp_{Ti}$) of the hot fluid at the given heat-source heat exchanger; and ii) the mass flowrate ($\dot{m}_{ti}$) of the working fluid (WF) through the given heat-source heat exchanger multiplied by the specific heat capacity ($cp_{ti}$) of the working fluid (WF) at the given heat-source heat exchanger.

5. The turbofan engine (100) of claim 4, wherein the one or more heat-source heat exchangers (220) include at least two heat-source heat exchangers (220), the at least two heat-source heat exchangers (220) being series-arranged heat-source heat exchangers (220), wherein the overall effectiveness ($\varepsilon_{HSHX}$) of the series-arranged heat-source heat exchangers (220) is defined as a quotient determined by dividing a first sequence sum ( $\sum_i^n \varepsilon_i \theta_i$ ) by a sum ( $(\sum_i^n \varepsilon_i \theta_i) + \theta_n$ ), wherein the sum ( $(\sum_i^n \varepsilon_i \theta_i) + \theta_n$ ) is determined by adding a second sequence sum ( $\sum_i^n \varepsilon_i \theta_i$ ) and a difference in temperature ($\theta_n$) of a hot fluid (HF) at a hot fluid inlet (226E) of a last heat-source heat exchanger of the series-arranged heat-source heat exchangers (220) and the working fluid (WF) at the working fluid inlet (230E) of the last heat-source heat exchanger,

> the first sequence sum ( $\sum_i^n \varepsilon_i \theta_i$ ) is determined by summing a first sequence of first expressions ($\varepsilon_i \theta_i$), a given first expression of the first expressions ($\varepsilon_i \theta_i$) being defined as a product determined by multiplying the effectiveness ($\varepsilon_i$) of the given heat-source heat exchanger by a difference in temperature ($\theta_i$) of a hot fluid (HF) at a hot fluid inlet (226E) and the working fluid (WF) at a working fluid inlet (230E) of the given heat-source heat exchanger, wherein a number of first expressions in the first sequence is equal to a number of heat-source heat exchangers (220) of the series-arranged heat-source heat exchangers (220), and
>
> the second sequence sum ( $\sum_i^n \varepsilon_i \theta_i$ ) is determined by summing a second sequence of second expressions ($\varepsilon_i \theta_i$), a given second expression of the second expressions ($\varepsilon_i \theta_i$) being defined as a product being determined by multiplying the effectiveness ($\varepsilon_i$) of the given heat-source heat exchanger by the difference in temperature ($\theta_i$) of the hot fluid (HF) at the hot fluid inlet (226E) and the working fluid (WF) at the working fluid inlet (230E) of the given heat-source heat exchanger, wherein a number of second expressions in the second sequence is equal to the number of heat-source heat exchangers (220) of the series-arranged heat-source heat exchangers (220).

6. The turbofan engine (100) of claim 4 or 5, wherein the one or more heat-source heat exchangers (220) include at least two heat-source heat exchangers (220), the at least two heat-source heat exchangers (220) being parallel-arranged heat-source heat exchangers (220), wherein the overall effectiveness ($\varepsilon_{HSHX}$) of the parallel-arranged heat-source heat exchangers (220) is defined as a quotient determined by dividing a first sequence sum ( $\sum_i^n \varepsilon_i \theta_i \dot{m}_{ti}$ ) by a second sequence sum ( $\sum_i^n \theta_i \dot{m}_{ti}$ ),

> the first sequence sum ( $\sum_i^n \varepsilon_i \theta_i \dot{m}_{ti}$ ) is determined by summing a first sequence of first expressions ($\varepsilon_i \theta_i \dot{m}_{ti}$), a given first expression of the first expressions being defined as a product determined by multiplying the effectiveness ($\varepsilon_i$) of the given heat-source heat exchanger by a difference in temperature ($\theta_i$) of a hot fluid (HF) at a hot fluid inlet (226E) and the working fluid (WF) at the working fluid inlet (230E) of the given heat-source heat exchanger by the mass flowrate ($\dot{m}_{ti}$) of the working fluid (WF) through the given heat-source heat exchanger, wherein a number of first expressions in the first sequence is equal to a number of heat-source heat exchangers (220) of the parallel-arranged heat-source heat exchangers (220), and
>
> the second sequence sum ( $\sum_i^n \theta_i \dot{m}_{ti}$ ) is determined by summing a second sequence of second expressions ($\theta_i \dot{m}_{ti}$), a given second expression of the second expressions being defined as a product being determined by multiplying the difference in temperature ($\theta_i$) of the hot fluid (HF) at the hot fluid inlet (226E) and the working fluid (WF) at the working fluid inlet (230E) of the given heat-source heat exchanger by the mass flowrate ($\dot{m}_{ti}$) of the working fluid (WF) through the given heat-source heat exchanger, wherein a number of second expressions in the second sequence is equal to the number of heat-source heat exchangers (220) of the parallel-arranged heat-source heat exchangers (220).

7. The turbofan engine (100) of any preceding claim, wherein the one or more heat-source heat exchangers (220) include at least three heat-source heat exchangers (220), and
wherein the overall effectiveness ($\varepsilon_{HSHX}$) of the at least three heat-source heat exchangers (220) is determined by:

> i) determining a resulting effectiveness between parallel-arranged heat-source heat exchangers (220) of the at least three heat-source heat exchangers (220), wherein the resulting effectiveness is treated as an effectiveness of a pseudo heat-source heat exchanger arranged in series with one or more series-arranged heat-source heat exchangers (220) of the at least three heat-source heat exchangers (220); and

ii) determining the overall effectiveness ($\varepsilon_{HSHX}$) of the one or more series-arranged heat-source heat exchangers (220) and the pseudo heat-source heat exchanger based at least in part on the effectiveness of the pseudo heat-source heat exchanger, with the difference in temperature between a hot fluid inlet (226E) and a working fluid inlet (230E) of the pseudo heat-source heat exchanger being determined by taking a temperature difference between an average value of hot fluid (HF) at hot fluid inlets (226E) of respective ones of the parallel-arranged heat-source heat exchangers (220) and an average value of the working fluid at working fluid inlets (230E) of respective ones of the parallel-arranged heat-source heat exchangers (220).

8. The turbofan engine (100) of any preceding claim, wherein the one or more heat-source heat exchangers (220) include a single heat-source heat exchanger, and wherein the overall effectiveness ($\varepsilon_{HSHX}$) is the effectiveness ($\varepsilon_i$) of the single heat-source heat exchanger.

9. The turbofan engine (100) of any preceding claim, wherein the thermal transport bus (210) capacity is between 0.07 and 33.65 for the overall inlet temperature ($T_{Inlet}$) of the working fluid (WF) at the overall inlet (222) being between 31 and 200 degrees Celsius and the propulsive effectiveness factor (PEF) being between 1.08 and 1.37.

10. The turbofan engine (100) of any preceding claim, wherein the thermal transport bus (210) capacity is between 0.07 and 26.48 for the overall inlet temperature ($T_{Inlet}$) of the working fluid (WF) at the overall inlet (222) being between 31 and 200 degrees Celsius and the propulsive effectiveness factor (PEF) being between 0.52 and 1.08.

11. The turbofan engine (100) of any preceding claim, wherein the thermal transport bus (210) capacity is between 3.34 and 33.65 for the overall inlet temperature ($T_{Inlet}$) of the working fluid (WF) at the overall inlet (222) being between 31 and 90 degrees Celsius and the propulsive effectiveness factor (PEF) being between 1.08 and 1.37.

12. The turbofan engine (100) of any preceding claim, wherein the thermal transport bus (210) capacity is between 0.07 and 4.24 for the overall inlet temperature ($T_{Inlet}$) of the working fluid (WF) at the overall inlet (222) being between 90 and 200 degrees Celsius and the propulsive effectiveness factor (PEF) being between 1.08 and 1.37.

13. The turbofan engine (100) of any preceding claim, wherein the thermal transport bus (210) capacity is between 0.96 and 26.48 for the overall inlet temperature ($T_{Inlet}$) of the working fluid (WF) at the overall inlet (222) being between 31 and 90 degrees Celsius and the propulsive effectiveness factor (PEF) being between 0.52 and 1.08.

14. The turbofan engine (100) of any preceding claim, wherein the thermal transport bus (210) capacity is between 0.07 and 3.34 for the overall inlet temperature ($T_{Inlet}$) of the working fluid (WF) at the overall inlet (222) being between 90 and 200 degrees Celsius and the propulsive effectiveness factor (PEF) being between 0.52 and 1.08.

15. A method (300), comprising:

operating a turbofan engine (100) so that a heat load is transferred, at one or more heat-source heat exchangers (220), from one or more hot fluids (HF) to a working fluid (WF) moving along a thermal transport bus (210) having a closed-cycle loop configuration and so that the heat load is transferred, at one or more heat-sink heat exchangers (240), from the working fluid (WF) to one or more cold fluids (CF), the turbofan engine (100) having a fan (134) and a core turbine engine (106),
the thermal transport bus (210) having a thermal transport bus (210) capacity being determined by multiplying a propulsive effectiveness factor (PEF) associated with the turbofan engine (100) by a heat load factor (HLF) associated with the thermal transport bus (210), the propulsive effectiveness factor (PEF) relates a fan diameter ($D_{FAN}$) of the fan (134), an axial length ($L_{Eng}$) of the turbofan engine (100), and a bypass ratio (BPR) of the turbofan engine (100), the heat load factor (HLF) relates an average specific heat capacity ($cp_{AVG}$) of the working fluid (WF) between an overall inlet (222) and an overall outlet (224) of the heat-source heat exchangers (220), a temperature difference ($\Delta T$) between the working fluid (WF) at the overall inlet (222) and the overall outlet (224), a pressure drop ($\Delta P$) across the thermal transport bus (210), a density ($\rho_{Inlet}$) of the working fluid (WF) at the overall inlet (222), an overall effectiveness ($\varepsilon_{HSHX}$) of the one or more heat-source heat exchangers (220), a critical temperature ($T_{Crit}$) of the working fluid (WF), an ambient temperature ($T_{Amb}$), and an overall inlet temperature ($T_{Inlet}$) of the working fluid (WF) at the overall inlet (222), and
wherein the thermal transport bus (210) capacity is between 0.07 and 33.65 for the overall inlet temperature ($T_{Inlet}$) of the working fluid (WF) at the overall inlet (222) being between 31 and 200 degrees Celsius and the propulsive effectiveness factor (PEF) being between 0.52 and 1.37.

FIG. 1

EP 4 299 888 A1

FIG. 2

FIG. 3

FIG. 4

FIG. 5

220

HF-C                                    HF

                228E                    226E

230E                                    232E

WF-C  →                                      →  WF-H

210        222              220E              224

FIG. 6

(1) $TTBC = PEF * HLF$

(2) $PEF = \dfrac{D_{FAN}}{L_{Eng}} * BPR^{1/4}$

(3) $HLF = \left( \dfrac{\frac{cp_{Avg} * \Delta T}{\frac{\Delta P}{\rho_{Inlet}}} * \varepsilon_{HSHX}} {} \right)^{\frac{1}{3} \left( \frac{T_{Crit} - T_{Amb}}{T_{Inlet} - T_{Amb}} \right)}$

(4) $\varepsilon_{HSHX} = \dfrac{\Sigma_i^n \varepsilon_i \theta_i}{(\Sigma_i^n \varepsilon_i \theta_i) + \theta_n}$

(4.1) $\varepsilon_{HSHX} = \dfrac{(\varepsilon_1 \theta_1) + (\varepsilon_2 \theta_2)}{((\varepsilon_1 \theta_1) + (\varepsilon_2 \theta_2)) + \theta_2}$

(5) $\varepsilon_{HSHX} = \dfrac{\Sigma_i^n \varepsilon_i \theta_i \dot{m}_{ti}}{\Sigma_i^n \theta_i \dot{m}_{ti}}$

(5.1) $\varepsilon_{HSHX} = \dfrac{(\varepsilon_1 \theta_1 \dot{m}_{t1}) + (\varepsilon_2 \theta_2 \dot{m}_{t2})}{(\theta_1 \dot{m}_{t1}) + (\theta_2 \dot{m}_{t2})}$

(6) $\varepsilon_i = \dfrac{\dot{m}_{ti} cp_{ti} \beta_i}{min(\dot{m}_{Ti} cp_{Ti}, \dot{m}_{ti} cp_{ti}) \theta_i}$

(6.1) $\varepsilon_1 = \dfrac{\dot{m}_{t1} cp_{t1} \beta_1}{min(\dot{m}_{T1} cp_{T1}, \dot{m}_{t1} cp_{t1}) \theta_1}$

## FIG. 7

THERMAL TRANSPORT BUS CAPACITY

FIG. 8

THERMAL TRANSPORT BUS CAPACITY

FIG. 9

THERMAL TRANSPORT BUS CAPACITY

FIG. 10

THERMAL TRANSPORT BUS CAPACITY

FIG. 11

THERMAL TRANSPORT BUS CAPACITY

FIG. 12

THERMAL TRANSPORT BUS CAPACITY

FIG. 13

## THERMAL TRANSPORT BUS CAPACITY

Legend:
- P_sCO2 = 74 bars, PEF = 0.52
- P_sCO2 = 87 bars, PEF = 1.08

sCO2 INLET TEMPERATURE (C)

THERMAL TRANSPORT BUS CAPACITY (-)

## FIG. 14

## THERMAL TRANSPORT BUS CAPACITY

Legend:
- P_sCO2 = 74 bars, PEF = 0.52
- P_sCO2 = 87 bars, PEF = 1.08
- P_sCO2 = 87 bars, PEF = 1.37

sCO2 INLET TEMPERATURE (C)

THERMAL TRANSPORT BUS CAPACITY (-)

## FIG. 15

| PARAMETERS | EXAMPLE 1 | EXAMPLE 2 | EXAMPLE 3 |
|---|---|---|---|
| sCO2 OVERALL INLET TEMPERATURE OF HEAT-SOURCE HEAT EXCHANGER(S) [HSHX(S)] (C) | 130 | 50 | 31 |
| sCO2 OVERALL OUTLET TEMPERATURE OF HSHX(S) (C) | 160 | 120 | 200 |
| sCO2 AVERAGE HEAT CAPACITY BTW. INLET & OUTLET OF HSHX(S) AT 87 BARS (J/kg-C) | 1220.8 | 2270.35 | 2735.35 |
| sCO2 DENSITY AT OVERALL INLET OF HSHX(S) AT 87 BARS (kg/m3) | 134.82 | 262.49 | 719.06 |
| PRESSURE-DROP ACROSS TTB SYSTEM (bar) | 2.5 | 1.5 | 0.3 |
| OVERALL EXCHANGER EFFECTIVENESS(-) | 0.3 | 0.7 | 0.9 |
| FAN DIAMETER (m) | 0.7 | 2.2 | 3.5 |
| ENGINE LENGTH (m) | 1.5 | 3 | 6.5 |
| BYPASS RATIO (-) | 3 | 12.5 | 20 |
| THERMAL TRANSPORT BUS CAPACITY (-) | 0.67 | 3.08 | 24.56 |

FIG. 16

EP 4 299 888 A1

300

302

OPERATING A TURBOFAN ENGINE SO THAT A HEAT LOAD IS TRANSFERRED, AT ONE OR MORE HEAT-SOURCE HEAT EXCHANGERS, FROM ONE OR MORE HOT FLUIDS TO A WORKING FLUID MOVING ALONG A THERMAL TRANSPORT BUS HAVING A CLOSED-CYCLE LOOP CONFIGURATION AND SO THAT THE HEAT LOAD IS TRANSFERRED, AT ONE OR MORE HEAT-SINK HEAT EXCHANGERS, FROM THE WORKING FLUID TO ONE OR MORE COLD FLUIDS, THE TURBOFAN ENGINE HAVING A FAN AND A CORE TURBINE ENGINE, THE THERMAL TRANSPORT BUS HAVING A THERMAL TRANSPORT BUS CAPACITY BEING DETERMINED BY MULTIPLYING A PROPULSIVE EFFECTIVENESS FACTOR ASSOCIATED WITH THE TURBOFAN ENGINE BY A HEAT LOAD FACTOR ASSOCIATED WITH THE THERMAL TRANSPORT BUS, THE PROPULSIVE EFFECTIVENESS FACTOR RELATES A FAN DIAMETER OF THE FAN, AN AXIAL LENGTH OF THE TURBINE ENGINE, AND A BYPASS RATIO OF THE TURBOFAN ENGINE, THE HEAT LOAD FACTOR RELATES AN AVERAGE SPECIFIC HEAT CAPACITY OF THE WORKING FLUID BETWEEN AN OVERALL INLET AND AN OVERALL OUTLET OF THE HEAT-SOURCE HEAT EXCHANGERS, A TEMPERATURE DIFFERENCE BETWEEN THE WORKING FLUID AT THE OVERALL INLET AND THE OVERALL OUTLET, A PRESSURE DROP ACROSS THE THERMAL TRANSPORT BUS, A DENSITY OF THE WORKING FLUID AT THE OVERALL INLET, AN OVERALL EFFECTIVENESS OF THE ONE OR MORE HEAT-SOURCE HEAT EXCHANGERS, A CRITICAL TEMPERATURE OF THE WORKING FLUID, AN AMBIENT TEMPERATURE, AND AN OVERALL INLET TEMPERATURE OF THE WORKING FLUID AT THE OVERALL INLET, AND WHEREIN THE THERMAL TRANSPORT BUS CAPACITY IS BETWEEN 0.07 AND 33.65 FOR THE OVERALL INLET TEMPERATURE OF THE WORKING FLUID AT THE OVERALL INLET BEING BETWEEN 31 AND 200 DEGREES CELSIUS AND THE PROPULSIVE EFFECTIVENESS FACTOR BEING BETWEEN 0.52 AND 1.37.

FIG. 17

Europäisches
Patentamt

European
Patent Office

Office européen
des brevets

# EUROPEAN SEARCH REPORT

Application Number

EP 23 17 1308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/257247 A1 (PAL KISHANJIT [IN] ET AL) 22 August 2019 (2019-08-22) * paragraphs [0059], [0060], [0061] * * figures 2-7 * | 1-15 | INV. F02C7/14 F02C7/16 |
| X | US 2021/148283 A1 (NIERGARTH DANIEL ALAN [US] ET AL) 20 May 2021 (2021-05-20) * paragraphs [0032], [0037], [0038] * * figures 1-3 * | 1-15 | |
| X | US 2020/165982 A1 (SMITH JUSTIN PAUL [US] ET AL) 28 May 2020 (2020-05-28) | 1-4,9-15 | |
| A | * paragraph [0055]; figures 1, 3 * | 5-8 | |
| A | US 2019/249599 A1 (SEN ARNAB [IN] ET AL) 15 August 2019 (2019-08-15) * figures 1, 2 * | 1,15 | |

TECHNICAL FIELDS
SEARCHED        (IPC)

F02C

The present search report has been drawn up for all claims

| Place of search | Date of completion of the search | Examiner |
|---|---|---|
| The Hague | 25 October 2023 | Mihé, Julian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 17 1308

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2023

| Patent document cited in search report | | Publication date | Patent family member(s) | | Publication date |
|---|---|---|---|---|---|
| US 2019257247 | A1 | 22-08-2019 | CN | 110173355 A | 27-08-2019 |
| | | | US | 2019257247 A1 | 22-08-2019 |
| US 2021148283 | A1 | 20-05-2021 | CN | 112814786 A | 18-05-2021 |
| | | | US | 2021148283 A1 | 20-05-2021 |
| US 2020165982 | A1 | 28-05-2020 | CN | 111237061 A | 05-06-2020 |
| | | | US | 2020165982 A1 | 28-05-2020 |
| | | | US | 2021246836 A1 | 12-08-2021 |
| US 2019249599 | A1 | 15-08-2019 | CN | 110159429 A | 23-08-2019 |
| | | | US | 2019249599 A1 | 15-08-2019 |

EPO FORM P0459

For more details about this annex : see Official Journal of the European Patent Office, No. 12/82